# EUROPEAN PATENT APPLICATION

(11) **EP 1 158 094 A1**
(43) Date of publication of application: **28.11.2001**
(21) Application number: 99959773.5
(22) Date of filing: 10.12.1999
(51) Int. Cl.: D21J 1/00, E04C 2/06

(54) **COMPOSITE HARDENED MATERIAL AND PRODUCTION METHOD THEREOF, SHEETY BUILDING MATERIALS USING THE COMPOSITE HARDENED MATERIAL, AND COMPOSITE BUILDING MATERIALS**

(30) Priority: 11.12.1998 JP 35258698; 29.01.1999 JP 2236299; 12.02.1999 JP 3468699
(71) Applicant: IBIDEN CO., LTD., Ogaki-shi Gifu-ken 503-0917 (JP)
(72) Inventor: MATSUNO, Yoshimi, Ibigawa-cho Ibi-gun Gifu 501-0695 (JP); OGAWA, Tetsuji, Ibigawa-cho Ibi-gun Gifu 501-0695 (JP); SATOU, Kenji, Ibigawa-cho Ibi-gun Gifu 501-0695 (JP); NOMURA, Toshihiro, Ibigawa-cho Ibi-gun Gifu 501-0695 (JP)
(74) Representative: Hill, Christopher Michael
(86) International application number: JP9906968
(87) International publication number: WO0036218

(57) **Abstract**

A composite hardened body 1 is characterized by containing an amorphous body 2 comprised of two or more oxides and including fibrous material 3 into the amorphous body 2, whereby the bending strength is improved without damaging the workability and productivity.

## Description

### TECHNICAL FIELD

This invention relates to a composite hardened body usable as various industrial materials and a method of producing the same as well as plate-shaped building materials and composite building materials using such a composite hardened body, and more particularly to a composite hardened body having excellent workability and productivity and capable of realizing the reduction of cost and being useful in the environmental protection and a method of producing the same as well as plate-shaped building materials and composite building materials using such a composite hardened body.

### BACKGROUND ART

Recently, it is examined to effectively utilize various industrial wastes from a viewpoint of the protection of earth environment. For example, in the building industry consuming forest resources on a massive scale, there is made a proposal that the consumption amount of the forest resources can be suppressed by newly providing a building material from the industrial wastes but also the cost can be reduced and the functions can be improved in inorganic boards usually used such as calcium silicate board, perlite plate, slag plaster plate, wooden cement plate, plaster board and the like.

For instance, JP-A-7-41350 discloses that pulp dregs created after the production of papers (scum) are effectively utilized as a building panel. According to this technique, inorganic substances obtained by firing the scum such as silica, alumina and the like are mixed with cement, fibers and water and then contact with a porous iron plate under pressure.

In JP-A-10-218643 is disclosed a cement admixture including a waste liquid slug.

In the technique disclosed in JP-A-7-41350, however, the iron plate and cement are used, so that there are problems that the workability is poor and the productivity lowers because it is required to conduct curing of cement.

In the technique disclosed in JP-A-10-218643, the compression strength is excellent, but there is a problem that the bending strength is low, so that when such a technique is applied pillar member, plate member and the like for the building materials, it is required to increase the bending strength.

Further, the cement is used even in all of the techniques, so that nails or the like can not be struck, and if the nail is forcibly struck, there is a disadvantage of causing the occurrence of crack.

It is, therefore, an object of the invention to solve the aforementioned problems and to provide a composite hardened body capable of effectively utilizing the industrial waste and improving the bending strength without damaging the workability and productivity and a method of producing the same as well as plate-shaped building materials and composite building materials using such a composite hardened body.

Moreover, when the composite hardened body is used in an exterior plate covering an outside of a building among the building materials, it is required to have an excellent waterproofness, and also it is important to prevent cracking due to freezing in cold districts.

For this end, it is another object of the invention to provide a composite hardened body improving the bending strength without damaging the workability and productivity and further improving water resistance and prevention of frozen crack required as the building material, and composite building materials using such a composite hardened body.

### DISCLOSURE OF INVENTION

The gist and construction of the invention are as follows.
(1) A composite hardened body comprising an amorphous body of two or more oxides and including fibrous materials in the amorphous body.
(2) A composite hardened body according to the item (1), wherein the oxide is Al₂O₃, SiO₂, CaO, Na₂O, MgO, P₂O₅, SO₃, K₂O, TiO₂, MnO, Fe₂O₃ or ZnO.
(3) A composite hardened body comprising an amorphous body of Al₂O₃-SiO₂-CaO system and including fibrous materials in the amorphous body.
(4) A composite hardened body comprising an amorphous body of Al₂O₃-SiO₂-CaO-oxide system and including fibrous materials in the amorphous body.
(5) A composite hardened body according to the item (4), wherein the oxide is at least one selected from Na₂O, MgO, P₂O₅, SO₃, K₂O, TiO₂, MnO, Fe₂O₃ and ZnO.
(6) A composite hardened body according to the item (3) or (4), wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.
(7) A composite hardened body according to any one of the items (1) to (6), wherein the fibrous material is an organic fibrous material consisting of a polysaccharide.
(8) A composite hardened body according to any one of the items (1) to (7), which further contains a halogen.
(9) A composite hardened body according to any one of the items (1) to (8), which further has a crystal body.
(10) A composite hardened body formed by hardening a paper-making sludge as an industrial waste.
(11) A composite hardened body comprising an amorphous body in which two or more elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis, and fibrous materials mixed in the amorphous body.
(12) A composite hardened body comprising an amorphous body in which Al, Si and Ca are confirmed to be existent by a fluorescent X-ray analysis and a harrow is observed within a range of 2θ: 15°-40° by an X-ray diffraction analysis, and fibrous materials mixed in the amorphous body.
(13) A composite hardened body comprising an amorphous body in which Al, Si and Ca are confirmed to be existent by a fluorescent X-ray analysis and further at least one element selected from Na, Mg, P, S, K, Ti, Mn, Fe and Zn is confirmed to be existent by the fluorescent X-ray analysis and a harrow is observed within a range of 2θ: 15°-40° by an X-ray diffraction analysis, and fibrous materials mixed in the amorphous body.
(14) A composite hardened body according to any one of the items (11) to (13), wherein the fibrous material is an organic fibrous material consisting of a polysaccharide.
(15) A composite hardened body according to any one of the items (11) to (14), which further contains a halogen.
(16) A composite hardened body according to any one of the items (11) to (15), which further has a crystal body.
(17) A composite hardened body according to any one of the items (11) to (16), wherein the amorphous body is formed by hardening a paper-making sludge as an industrial waste.
(18) A composite hardened body according to any one of the items (1) to (17), which further contains inorganic powder.
(19) A composite hardened body according to any one of (1) to (17), wherein further contains a binder.
(20) A composite hardened body according to any one of the items (1) to (9) or any one of the items (11) to (17), wherein the fibrous materials are oriented. Moreover, the feature that the fibrous materials are oriented means that a longitudinal direction of each fiber is aligned in a particular direction.
(21) A composite building material comprising a reinforcing layer formed on at least one surface of a core material, in which a composite hardened body as described in any one of the items (1) to (20) is applied to said core material.
(22) A composite hardened body comprising an inorganic amorphous body and organic fibrous materials consisting of a polysaccharide and dispersed therein.
   Moreover, the organic fibrous materials consisting of the polysaccharide may be oriented in a particular direction because the bending strength can be improved by the orientation in the particular direction.
(23) A composite hardened body according to the item (22), wherein a binder is further included in the composite hardened body.
(24) A composite hardened body according to the item (22) or (23), wherein a halogen is included in the composite hardened body.
(25) A composite hardened body according to any one of the items (22) to (24), wherein a crystal body is included in the composite hardened body.
(26) A composite hardened body comprising inorganic powder and organic fibrous materials consisting of a polysaccharide.
(27) A composite hardened body comprising inorganic powder, organic fibrous materials consisting of a polysaccharide and a binder.
(28) A composite hardened body according to the item (23) or (27), wherein the binder is a thermosetting resin or an inorganic binding agent.
(29) A composite hardened body according to the item (26) or (27) or the item (28) dependent upon the item (27) (that is, (27) including the subject matter of (28)), wherein the inorganic powder is powder of an inorganic industrial waste.
(30) A composite hardened body according to the item (29), wherein the inorganic industrial waste is at least one selected from the group consisting of a hardened body of an inorganic mass included in a paper-making sludge, fired powder of a paper-making sludge, polished scrap of glass and pulverized scrap of silica sand.
(31) A composite hardened body according to any one of the items (22) to (30), wherein the organic fibrous material is a pulp or a pulp dreg.
(32) A plate-shaped building material obtained by shaping a material including a composite hardened body as described in any one of the items (22) to (31) into a plate.
(33) A composite building material comprising a reinforcing layer formed on at least one surface of a core material, in which the core material consists of a material including a composite hardened body as described in any one of the items (22) to (31).
(34) A plate-shaped building material comprising inorganic powder of an industrial waste and organic fibrous materials.
(35) A plate-shaped building material according to the item (34), which further contains a binder.
(36) A plate-shaped building material according to the item (35), wherein the binder is a thermosetting resin or an inorganic binding agent.
(37) A plate-shaped building material according to the item (34), wherein the organic fibrous material is an industrial waste.
(38) A plate-shaped building material according to the item (37), wherein the industrial waste is an unfired mass of paper-making sludge.
(39) A plate-shaped building material according to the item (34), wherein the organic fibrous material is a pulp or a pulp dreg.
(40) A plate-shaped building material according to the item (34) or (35), wherein the powder of the inorganic industrial waste is at least one powder selected from the group consisting of a hardened body of an inorganic mass included in a paper-making sludge, fired powder of a paper-making sludge, polished scrap of glass and pulverized scrap of silica sand.
(41) A composite building material comprising a reinforcing layer consisting of a resin and a fibrous substrate and formed on at least one surface of a plate-shaped building material as claimed in any one of the items (34) to (40).
(42) A composite hardened body comprising an inorganic crystal in an inorganic amorphous body and including fibrous materials therein.
   Moreover, the inorganic crystal is desirable to contain Ca.
(43) A composite hardened body comprising CaCO₃ in an inorganic amorphous body and including fibrous materials therein.
(44) A composite hardened body according to the item (42) or (43), wherein the inorganic amorphous body includes at least two elements selected from Al, Si, Ca, Na, Mg, P, S, K, Ti, Mn, Fe and Zn.
(45) A composite hardened body according to the item (42) or (43), wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.
(46) A composite hardened body according to the item (42) or (43), wherein the inorganic amorphous body is an inorganic amorphous body of Al₂O₃-SiO₂-CaO system.
(47) A composite hardened body according to the item (42) or (43), wherein the inorganic amorphous body is an inorganic amorphous body of Al₂O₃-SiO₂-CaO-oxide system.
(48) A composite hardened body according to the item (47), wherein the oxide is at least one selected from Na₂O, MgO, P₂O₅, SO₃, K₂O, TiO₂, MnO, Fe₂O₃ and ZnO.
(49) A composite hardened body according to the item (45), (46) or (47), wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.
(50) A composite hardened body according to the item (42) or (43), wherein the inorganic amorphous body contains two or more elements selected from Al, Si, Ca, Na, Mg, P, S, K, Ti, Mn, Fe and Zn confirmed by a fluorescent X-ray analysis and has a harrow observed within a range of 2θ: 15°-40° by an X-ray diffraction analysis.
(51) A composite hardened body according to the item (42) or (43), wherein the inorganic amorphous body contains Al, Si and Ca confirmed by a fluorescent X-ray analysis and has a harrow observed within a range of 2θ: 15°-40° in a chart by an X-ray diffraction analysis.
(52) A composite hardened body according to the item (42) or (43), wherein the inorganic amorphous body contains Al, Si and Ca confirmed by a fluorescent X-ray analysis and further includes at least one element selected from Na, Mg, P, S, K, Ti, Mn, Fe and Zn confirmed by the fluorescent X-ray analysis and has a harrow observed within a range of 2θ: 15°-40° in a chart by an X-ray diffraction analysis.
(53) A composite hardened body according to any one of the items (42) to (52), wherein the fibrous material is an organic fibrous material consisting of a polysaccharide.
(54) A composite hardened body according to any one of the items (42) to (52), which further contains a halogen.
(55) A composite hardened body according to any one of the items (42) to (54), wherein the fibrous materials are oriented. Moreover, the feature that the fibrous materials are oriented means that a longitudinal direction of each fiber is aligned in a particular direction.
(56) A composite hardened body formed by hardening a paper-making sludge as an industrial waste and containing an inorganic crystal.
(57) A composite hardened body formed by hardening a paper-making sludge as an industrial waste and containing CaCO₃.
(58) A composite hardened body according to any one of the items (42) to (57), which further contains inorganic powder.
(59) A composite hardened body according to any one of the items (42) to (58), which further contains a binder.
(60) A composite building material comprising a reinforcing layer formed on at least one surface of a core material, in which a composite hardened body as described in any one of the items (42) to (59) is applied to said core material.
(61) A composite building material comprising a decorative layer formed on at least one surface of a core material, in which a composite hardened body as described in any one of the items (42) to (59) is applied to said core material.
(62) A composite building material comprising an electromagnetic wave shielding layer formed on at least one surface of a core material, in which a composite hardened body as described in any one of the items (42) to (59) is applied to said core material.
(63) A composite building material comprising a waterproof paper adhered onto at least one surface of a core material, in which a composite hardened body as described in any one of the items (42) to (59) is applied to said core material.
(64) A composite hardened body comprising fibrous material included in an inorganic amorphous body, and having a specific gravity of 0.2-2.2.
(65) A composite hardened body according to the item (64), wherein at least two elements selected from Al, Si, Ca, Na, Mg, P, S, K, Ti, Mn, Fe and Zn are included in the inorganic amorphous body.
(66) A composite hardened body according to the item (64), wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.
(67) A composite hardened body comprising fibrous materials included in an inorganic amorphous body of Al₂O₃-SiO₂-CaO system, and having a specific gravity of 0.2-2.2.
(68) A composite hardened body comprising fibrous materials included in an inorganic amorphous body of Al₂O₃-SiO₂-CaO-oxide system, and having a specific gravity of 0.2-2.2.
(69) A composite hardened body according to the item (68), wherein the oxide is at least one selected from Na₂O, MgO, P₂O₅, SO₃, K₂O, TiO₂, MnO, Fe₂O₃ and ZnO.
(70) A composite hardened body according to the item (67) or (68), wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.
(71) A composite hardened body according to any one of the items (64) to (70), wherein the fibrous material is an organic fibrous material consisting of a polysaccharide.
(72) A composite hardened body according to any one of the items (64) to (71), which further contains a halogen.
(73) A composite hardened body according to any one of the items (64) to (72), which further has a crystal body.
(74) A composite hardened body formed by hardening a paper-making sludge as an industrial waste, and having a specific gravity of 0.2-2.2.
(75) A composite hardened body, characterized in that fibrous material are included in an inorganic amorphous body in which at least two elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis, and a specific gravity is 0.2-2.2.
(76) A composite hardened body, characterized in that fibrous material are included in an inorganic amorphous body in which Al, Si and Ca are confirmed to be existent by a fluorescent X-ray analysis and a harrow is observed within a range of 2θ: 15°-40° by an X-ray diffraction analysis, and a specific gravity is 0.2-2.2.
(77) A composite hardened body, characterized in that fibrous material are included in an inorganic amorphous body in which Al, Si and Ca are confirmed to be existent by a fluorescent X-ray analysis and further at least one element selected from Na, Mg, P, S, K, Ti, Mn, Fe and Zn are confirmed to be existent by the fluorescent X-ray analysis and a harrow is observed within a range of 2θ: 15°-40° by an X-ray diffraction analysis, and a specific gravity is 0.2-2.2.
(78) A composite hardened body according to any one of the items (75) to (77), wherein the fibrous material is an organic fibrous material consisting of a polysaccharide.
(79) A composite hardened body according to any one of the items (75) to (77), which further contains a halogen.
(80) A composite hardened body according to any one of the items (75) to (77), which further has a crystal body.
(81) A composite hardened body according to any one of the items (75) to (77), wherein the composite hardened body is formed by hardening a paper-making sludge as an industrial waste.
(82) A composite hardened body according to any one of the items (64) to (81), which further contains inorganic powder.
(83) A composite hardened body according to any one of the items (64) to (82), which further contains a binder.
(84) A composite building material comprising a reinforcing layer formed on at least one surface of a core material, in which a composite hardened body as described in any one of the items (64) to (83) is applied to said core material.
(85) A composite building material comprising a decorative layer formed on at least one surface of a core material, in which a composite hardened body as described in any one of the items (64) to (83) is applied to said core material.
(86) A composite building material comprising an electromagnetic wave shielding layer formed on at least one surface of a core material, in which a composite hardened body as described in any one of the items (64) to (83) is applied to said core material.
(87) A composite building material comprising a waterproof paper adhered onto at least one surface of a core material, in which a composite hardened body as described in any one of the items (64) to (83) is applied to said core material.
(88) A composite hardened body comprising fibrous materials included in an inorganic amorphous body, and having a porosity of 5-60%.
(89) A composite hardened body according to the item (88), wherein at least two elements selected from Al, Si, Ca, Na, Mg, P, S, K, Ti, Mn, Fe and Zn are included in the inorganic amorphous body.
(90) A composite hardened body according to the item (88), wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.
(91) A composite hardened body comprising fibrous materials included in an inorganic amorphous body of Al₂O₃-SiO₂-CaO system, and having a porosity of 5-60%.
(92) A composite hardened body comprising fibrous materials included in an inorganic amorphous body of Al₂O₃-SiO₂-CaO-oxide system, and having a porosity of 5-60%.
(93) A composite hardened body according to the item (92), wherein the oxide is at least one selected from Na₂O, MgO, P₂O₅, SO₃, K₂O, TiO₂, MnO, Fe₂O₃ and ZnO.
(94) A composite hardened body according to the item (91) or (92), wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.
(95) A composite hardened body according to any one of the items (88) to (94), wherein the fibrous material is an organic fibrous material consisting of a polysaccharide.
(96) A composite hardened body according to any one of the items (88) to (95), wherein the fibrous materials are oriented into a particular direction.
(97) A composite hardened body according to any one of the items (88) to (96), which further contains a halogen.
(98) A composite hardened body according to any one of the items (88) to (97), which further has a crystal body.
(99) A composite hardened body according to any one of the items (88) to (98), wherein the composite hardened body is formed by hardening a paper-making sludge as an industrial waste.
(100) A composite hardened body formed by hardening a paper-making sludge as an industrial waste, and having a porosity of 5-60%.
(101) A composite hardened body, characterized in that fibrous materials are included in an inorganic amorphous body in which at least two elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis, and a porosity is 5-60%.
(102) A composite hardened body, characterized in that fibrous material are included in an inorganic amorphous body in which Al, Si and Ca are confirmed to be existent by a fluorescent X-ray analysis and a harrow is observed within a range of 2θ: 15°-40° in a chart by an X-ray diffraction analysis, and a porosity is 5-60%.
(103) A composite hardened body, characterized in that fibrous material are included in an inorganic amorphous body in which Al, Si and Ca are confirmed to be existent by a fluorescent X-ray analysis and further at least one element selected from Na, Mg, P, S, K, Ti, Mn, Fe and Zn are confirmed to be existent by the fluorescent X-ray analysis and a harrow is observed within a range of 2θ: 15°-40° in a chart by an X-ray diffraction analysis, and a porosity is 5-60%.
(104) A composite hardened body according to any one of the items (101) to (103), wherein the fibrous material is an organic fibrous material consisting of a polysaccharide.
(105) A composite hardened body according to any one of the items (101) to (104), wherein the fibrous materials are oriented into a particular direction.
(106) A composite hardened body according to any one of the items (101) to (103), which further contains a halogen.
(107) A composite hardened body according to any one of the items (101) to (103), which further has a crystal body.
(108) A composite hardened body according to any one of the items (101) to (103), wherein the composite hardened body is formed by hardening a paper-making sludge as an industrial waste.
(109) A composite hardened body according to any one of the items (88) to (108), which further contains inorganic powder.
(110) A composite hardened body according to any one of the items (88) to (108), which further contains a binder.
(111) A composite building material comprising a reinforcing layer formed on at least one surface of a core material, in which a composite hardened body as described in any one of the items (88) to (110) is applied to said core material.
(112) A composite building material comprising a reinforcing layer formed on at least one surface of a core material, in which a composite hardened body as described in any one of the items (88) to (110) is applied to said core material.
(113) A composite building material comprising a decorative layer formed on at least one surface of a core material, in which a composite hardened body as described in any one of the items (88) to (110) is applied to said core material.
(114) A composite building material comprising an electromagnetic wave shielding layer formed on at least one surface of a core material, in which a composite hardened body as described in any one of the items (88) to (110) is applied to said core material.
(115) A composite building material comprising a waterproof paper adhered onto at least one surface of a core material, in which a composite hardened body as described in any one of the items (88) to (110) is applied to said core material.
(116) A composite hardened body comprising fibrous materials included in an inorganic amorphous body containing at least two elements selected from Al, Si, Ca, Na, Mg, P, S, K, Ti, Mn, Fe and Zn.
(117) A composite hardened body comprising fibrous materials included in an inorganic amorphous body containing at least Al, Si and Ca.
(118) A composite hardened body comprising fibrous materials included in an inorganic amorphous body containing Al, Si and Ca and further at least one element selected from Na, Mg, P, S, K, Ti, Mn, Fe and Zn.
(119) A composite hardened body according to any one of the items (116) to (118), wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.
(120) A composite hardened body according to any one of the items (116) to (119), wherein the fibrous material is an organic fibrous material consisting of a polysaccharide.
(121) A composite hardened body according to any one of the items (116) to (120), which further contains a halogen.
(122) A composite hardened body according to any one of the items (116) to (121), which further has a crystal body.
(123) A composite hardened body according to any one of the items (116) to (122), wherein the fibrous materials are oriented. In this case, the feature that the fibrous materials are oriented means that a longitudinal direction of each fiber is aligned in a particular direction.
(124) A composite hardened body formed by hardening a paper-making sludge as an industrial waste.
(125) A composite building material comprising a reinforcing layer formed on at least one surface of a core material, in which a composite hardened body as described in any one of the items (116) to (124) is applied to said core material.
(126) A composite building material comprising a decorative layer formed on at least one surface of a core material, in which a composite hardened body as described in any one of the items (116) to (125) is applied to said core material.
(127) A composite building material comprising an electromagnetic wave shielding layer formed on at least one surface of a core material, in which a composite hardened body as described in any one of the items (116) to (126) is applied to said core material.
(128) A composite building material comprising a waterproof paper adhered onto at least one surface of a core material, in which a composite hardened body as described in any one of the items (116) to (127) is applied to said core material.
(129) A method of producing as composite hardened body consisting of an inorganic amorphous body and organic fibrous materials, which comprises drying and hardening a paper-making sludge.
(130) A method of producing a composite hardened body according to the item (129), wherein the paper-making sludge is dried and hardened while applying a pressure.
(131) A method of producing a composite hardened body according to the item (129) or (130), wherein the paper-making sludge is dried and hardened while applying a pressure of 10-300 kg/cm².
(132) A method of producing a composite hardened body according to the item (129), wherein the paper-making sludge is dehydrated while applying a pressure and then dried and hardened.
(133) A method of producing a composite hardened body according to the item (132), wherein the paper-making sludge is applied with a pressure of 10-100 kg/cm² and then dried and hardened.
(134) A method of producing a composite hardened body according to any one of the items (129) to (133), wherein inorganic particles are included in the paper-making sludge.
(135) A method of producing a composite hardened body according to any one of the items (129) to (133), wherein the pressure is applied while dehydrating.
(136) A method of producing a composite hardened body consisting of an inorganic amorphous body and organic fibrous materials, which comprises dehydrating a paper-making sludge by suction and then drying and hardening it.
(137) A method of producing a composite hardened body consisting of an inorganic amorphous body and organic fibrous materials, which comprises dehydrating a paper-making sludge by suction and an application of a pressure and then drying and hardening it.
(138) A composite hardened body comprising an inorganic hardened body and a water absorption preventing agent (inclusive of a water repellent), in which fibrous materials are included in the inorganic amorphous body.
(139) A composite hardened body comprising an inorganic hardened body consisting of two or more oxides and a water absorption preventing agent, in which fibrous materials are included in the inorganic amorphous body.
(140) A composite hardened body according to the item (138) or (139), wherein the water absorption preventing agent is included within a range of 0.1-3.0 wt%.
(141) A composite hardened body according to the item (138) or (139), wherein the water absorption preventing agent is calcium stearate, an aliphatic acid derivative or a paraffin wax.
(142) A composite hardened body comprising fibrous materials included in an inorganic amorphous body, in which a water absorption preventing agent layer is formed on a surface thereof.
(143) A composite hardened body according to the item (142), wherein the water absorption preventing agent layer is a thermosetting resin layer.
(144) A composite hardened body according to any one of the items (138) to (143), wherein the fibrous materials are oriented. In this case, the feature that the fibrous materials are oriented means that the longitudinal direction of each fiber is aligned in a particular direction.
(145) A composite building material comprising a reinforcing layer formed on at least one surface of a core material, in which a composite hardened body as described in any one of the items (138) to (144) is applied to said core material.

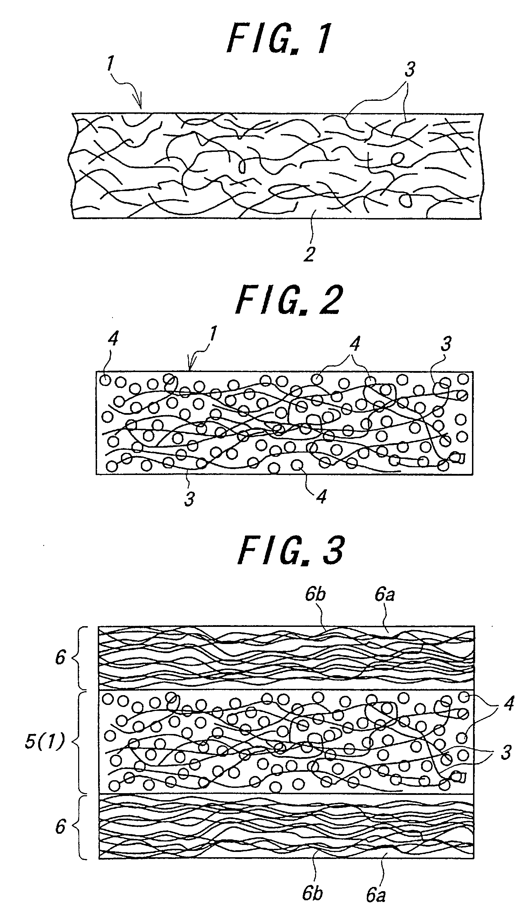

A basic structure of a composite hardened body according to the invention is diagrammatically shown in Fig. 1. The composite hardened body 1 comprises an amorphous body 2 consisting of two or more oxides, in which fibrous materials 3 are included in the amorphous body 2.

In one embodiment of the invention, the composite hardened body 1 is characterized in that inorganic crystal is existent in the inorganic amorphous body 2 and further fibrous materials 3 are included in the inorganic amorphous body 2.

By the presence of such an inorganic crystal body are improved compression strength, bending strength and crack resistance. Although the reason is not clear, it is guessed that the crystal body obstructs the growth of crack and improves hardness and density to hardly create the crack, and plays a role as a support to compression force.

As such a crystal body, there are crystal bodies of hydrogen, aluminum silicate, kaolinite, zeolite, gehlenite, syn, anorthite, melitite, gehlenite-synthetic, tobermorite, xonotlite, ettringite; oxides such as SiO₂, Al₂O₃, CaO, Na₂O, MgO, P₂O₅, SO₃, K₂O, TiO₂, MnO, Fe₂O₃, ZnO and the like; CaCO₃ (calsite) and so on.

The content of the crystal body is desirable to be 0.1-50% by weight based on total weight of the composite hardened body. Because, when the crystal body is too small, the above effect is not obtained, while when it is too large, the strength lowers.

Incidentally, a crystalline compound of Al₂O₃-SiO₂ system is hydrogen aluminum silicate, kaolinite or zeolite, and a crystalline compound of Al₂O₃-CaO system is calcium aluminate, and a crystalline compound of CaO-SiO₂ system is calcium silicate, and a crystalline compound of Al₂O₃-SiO₂-CaO system is gehlenite or anorthite, and a crystalline compound of Al₂O₃-SiO₂-CaO-MgO system is melitite or gehlenite-synthetic.

Further, calcium carbonate (calsite) may be added as the crystal body. Although calcium carbonate itself is not a substance developing strength, it is considered that calcium carbonate is surrounded with the inorganic amorphous body to develop an action of preventing the growth of crack to thereby contribute to the improvement of strength, and also it is guessed that it plays a role as a support to compression force. The content of calcium carbonate is desirable to be not more than 48% by weight based on the total weight of the composite hardened body. Because, when it exceeds 48% by weight, the bending strength lowers. And also, it is desirable to be not less than 0.1 % by weight. When it is less than 0.1 % by weight, it does not contribute to the improvement of strength.

In another embodiment of the invention, the composite hardened body 1 is basic to comprise an inorganic amorphous body 2 consisting of two or more oxides in which organic fibrous materials 3 are included in the inorganic amorphous body 2.

In the other embodiment of the invention, the composite hardened body 1 is basic to comprise an inorganic amorphous body 2 in which organic fibrous materials 3 consisting of a polysaccharide are included in the amorphous body 2.

In a still further embodiment of the invention, the composite hardened body 1 is characterized in that fibrous materials 3 are included in an inorganic amorphous body 2, and has a specific gravity of 0.2-2.2.

In this case, the specific gravity means a density of a substance when a density of water at 4°C is 1. The measurement of the specific gravity is carried out by measuring a volume and a weight of a hardened body and calculating according to (weight/volume)/0.999973.

When the specific gravity is less than 0.2, pores become too large and the strength of the composite hardened body lowers, while when the specific gravity exceeds 2.2, the influence of the inorganic hardened body itself upon the strength becomes too large and the reinforcing effect of the fibrous material relatively lowers and finally the strength lowers. That is, when the specific gravity is within a range of 0.2-2.2, practical compression strength and bending strength are obtained. Such a range is said to be a peculiar range for obtaining the strength.

Especially, the specific gravity is preferable to be 0.5-1.8, and is optimum to be 0.7-1.4. In this range, crack can peculiarly be controlled in the striking of nail. That is, when the specific gravity is less than 0.5, the number of pores is too large and the pore promotes the crack, while when it exceeds 1.8, the influence of the inorganic amorphous body itself becomes too large and the reinforcing effect of the fibrous material relatively lowers and hence the value of toughness at break lowers to easily create the crack. Therefore, the specific gravity is adjusted to 0.5-1.8, whereby the crack can first be controlled.

Moreover, the reason why the specific gravity range capable of controlling the crack is narrower than the range for obtaining the strength is guessed due to the fact that the value of toughness at break is strongly influenced by the pores and the fibrous materials as compared with the bending strength and the like.

In a further embodiment of the composite hardened body according to the invention, the composite hardened body 1 is characterized in that fibrous materials 3 are included in an inorganic amorphous body 2, and has a porosity of 5-60%.

The porosity is calculated by 100% - (apparent specific gravity/true specific gravity) x 100%.

The specific gravity means a density of a substance when a density of water at 4°C is 1. The measurement of the specific gravity is carried out by measuring a volume and a weight of a hardened body and calculating according to (weight/volume)/0.999973.

And also, the true specific gravity is calculated from theoretical density and composition ratio of constituents by weighted mean.

When the porosity exceeds 60%, the strength of the composite hardened body lowers, while when the porosity is less than 5%, the influence of the inorganic hardened body itself upon the strength becomes too large and the reinforcing effect of the fibrous material relatively lowers and finally the strength lowers.

The porosity is optimum to be 10-50%. This is a range capable of controlling the crack.

In another embodiment of the composite hardened body according to the invention, the composite hardened body 1 is basic to comprise an amorphous body 2 consisting of two or more oxides and a water absorption preventing agent (inclusive of a water repellent) (not shown) and include fibrous materials 3 in the amorphous body 2.

The inorganic amorphous body 2 is not particularly restricted, but oxides of at least two elements selected from Al, Si, Ca, Na, Mg, P, S, K, Ti, Mn, Fe and Zn can be used, and particularly it is desirable to use an amorphous body consisting of two or more oxides.

The amorphous body consisting of two or more oxides means an amorphous body of oxide (1) - oxide (2)···- oxide (n) system (wherein n is a natural number, and oxide (1), oxide (2) ··· oxide (n) are different oxides).

Such an amorphous body is difficult to be correctly defined, but is considered to be an amorphous compound produced by subjecting two or more oxides to a solid solution, a hydration reaction or the like.

In such an inorganic amorphous compound, elements constituting the oxide (at least two selected from Al, Si, Ca, Na, Mg, P, S, K, Ti, Mn, Fe and Zn) are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 2θ: not less than 2°.

The composite hardened body 1 can improve the bending strength and shock resistance because the amorphous body 2 is first a strength developing substance and the fibrous materials 3 are dispersed in the amorphous body 2 to improve the value of toughness at break. And also, the amorphous body is easy to have pores and adjust the specific gravity as compared with the crystalline body.

Further, the amorphous body has not an anisotropy in the strength, so that there is provided a homogenous hardened body. And also, the amorphous body has a merit that sufficient strength is provided at a low density.

Moreover, the reason why the amorphous body is a strength developing substance is not clear, but it is guessed that the growth of crack is obstructed as compared with the structure of the crystalline body. And also, it is considered that when the amorphous body is compared with the crystalline body, the fibrous materials are easily and uniformly dispersed to improve the value of toughness at break. As a result, even if nails are struck or a through-hole is formed, crack is not created, so that the composite hardened body is optimum as a material requiring a work such as building materials or the like.

In a still further embodiment of the invention, an organic fibrous material consisting of a polysaccharide is used as the fibrous material. Since OH group is existent in the organic fibrous material consisting of the polysaccharide and integrally united with OH group existing in the inorganic amorphous body through hydrogen bonding, it is considered that the value of toughness at break in the composite hardened body itself can be largely increased to improve the crack resistance and bending strength.

As a result, even if nails are struck or a through-hole is formed, crack is not created, so that the composite hardened body is optimum as a material requiring a work such as building materials or the like.

As the oxide may be used oxides of metal and/or non-metal, which is desirable to be selected from Al₂O₃, SiO₂, CaO, Na₂O, MgO, P₂O₅, SO₃, K₂O, TiO₂, MnO, Fe₂O₃ and ZnO. Especially, inorganic amorphous body of Al₂O₃-SiO₂-CaO system or Al₂O₃-SiO₂-CaO-oxide system, or a composite of these inorganic amorphous bodies is optimum. Moreover, the oxide in the latter inorganic amorphous body is one or more oxides of metal and/or non-metal other than Al₂O₃, SiO₂ and CaO.

Firstly, the amorphous body of Al₂O₃-SiO₂-CaO system is a compound having an amorphous structure produced by subjecting a whole or a part of each of Al₂O₃, SiO₂ and CaO to solid solution, hydration reaction or the like. That is, it is considered to include either of compounds produced by subjecting a combination of Al₂O₃ and SiO₂, SiO₂ and CaO, Al₂O₃ and CaO or Al₂O₃, SiO₂ and CaO to solid solution, hydration reaction or the like.

In such an inorganic amorphous compound, Al, Si and Ca are confirmed by a fluorescent X-ray analysis, and a harrow is observed within a range of 2θ: 15°-40° in a chart by an X-ray diffraction analysis. This harrow is a gentle undulation of X-ray intensity, which is observed as a broad upheavement in the X-ray chart. Moreover, a half-width value of the harrow is 2θ: not less than 2°.

And also, the amorphous body of a system added with at least one oxide in addition to Al₂O₃, SiO₂ and CaO, i.e. Al₂O₃-SiO₂-CaO-oxide system is considered to include either of compounds produced by subjecting a combination of Al₂O₃ and oxide, SiO₂ and oxide, CaO and oxide, Al₂O₃, SiO₂ and oxide, SiO₂, CaO and oxide, Al₂O₃, CaO and oxide or Al₂O₃, SiO₂, CaO and oxide in addition to the above combination in Al₂O₃-SiO₂-CaO system to solid solution, hydration reaction or the like.

Moreover, in case of the amorphous body of two or more oxides or Al₂O₃-SiO₂-CaO-oxide (1) ···.- oxide (n) (n is a natural number of not less than 2), it is considered to include either of compounds produced by subjecting a combination of these oxides, for example, at least two oxides selected from oxide (1), oxide (2) ··· oxide (n) (n is a natural number of not less than 2, and oxide (n) means different oxide when the value of n is different and excludes Al₂O₃, SiO₂ and CaO) to solid solution, hydration reaction or the like, compounds produced by subjecting a combination of at least two selected from Al₂O₃, SiO₂ and CaO to solid solution, hydration reaction or the like, and further compounds produced by subjecting a combination of at least one selected from oxide (1), oxide (2) ··· oxide (n) (n is a natural number of not less than 2) and at least one selected from Al₂O₃, SiO₂ and CaO to solid solution, hydration reaction or the like.

In such an inorganic amorphous compound, Al, Si, Ca and further elements constituting the oxide (two or more selected from Na, Mg, P, S, K, Ti, Mn, Fe and Zn) are confirmed by a fluorescent X-ray analysis, and a harrow is observed within a range of 2θ: 15°-40° in a chart by an X-ray diffraction analysis.

In this case, the oxide to be combined with Al₂O₃, SiO₂ and CaO is one or more and can use oxide of metal and/or non-metal other than Al₂O₃, SiO₂ and CaO. For example, there can be selected from Na₂O, MgO, P₂O₅, SO₃, K₂O, TiO₂, MnO, Fe₂O₃ and ZnO. This selection can be carried out based on properties excepted in the composite hardened body.

For instance, Na₂O or K₂O can be removed with an alkali or the like, so that when the removal treatment is carried out prior to a plating treatment, the surface of the composite hardened body to be plated can be roughened to act as an anchor for plating.

MgO contributes to develop strength as a solid solution with Al₂O₃, SiO₂ and CaO to largely improve the bending strength and shock resistance.

P₂O₅ is particularly useful when being used as a biological material (dental implant, artificial bone) for assisting an adhesion to bone.

SO₃ is suitable as an antibacterial building material because it has an antibacterial property.

TiO₂ is a white coloring matter and acts as a photo-oxidation catalyst, so that an adhered organic contaminant substance can be forcibly oxidized and cleaned only by irradiating a light. Therefore, it has a peculiar effect capable of using as a self-cleanable building material or various filters or a reaction catalyst.

MnO is useful as a darkish coloring matter, and Fe₂O₃ is useful as a bright coloring matter, and ZnO is a white coloring matter.

Moreover, these oxides may be existent in the amorphous body alone.

The above amorphous body is preferable to have a composition converted into each of Al₂O₃, SiO₂ and CaO that Al₂O₃: 3-51% by weight per total weight of the composite hardened body, SiO₂: 5-53% by weight per total weight of the composite hardened body and CaO: 6-63% by weight per total weight of the composite hardened body, and a sum of three oxides does not exceeds 100% by weight.

Because, when the content of Al₂O₃ is less than 3% by weight or exceeds 51% by weight, the strength of the composite hardened body lowers, while even when the content of SiO₂ is less than 5% by weight or exceeds 53% by weight, the strength of the composite hardened body lowers. And also, when the content of CaO is less than 6% by weight or exceeds 63% by weight, the strength of the composite hardened body also lowers.

Moreover, the amorphous body is more preferable to have a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.

Further, in order to obtain a hardened body having a higher strength, it is advantageous to adjust a ratio of CaO/SiO₂ to 0.2-7.9 and a ratio of CaO/Al₂O₃ to 0.2-12.5, respectively, as converted into oxide.

When one or more of Na₂O, MgO, P₂O₅, SO₃, K₂O, TiO₂, MnO, Fe₂O₃ and ZnO are included as an oxide other than Al₂O₃, SiO₂ and CaO, a preferable content of each oxide is as follows. It is needless to say that the total content of these oxides does not exceeds 100% by weight.
Na₂O: 0.1-2.4% by weight per total weight of the composite hardened body
MgO: 0.3-22.0% by weight per total weight of the composite hardened body
P₂O₅: 0.1-14.6% by weight per total weight of the composite hardened body
SO₃: 0.1-7.0% by weight per total weight of the composite hardened body
K₂O: 0.1-2.4% by weight per total weight of the composite hardened body
TiO₂: 0.1-17.4% by weight per total weight of the composite hardened body
MnO: 0.1-3.0% by weight per total weight of the composite hardened body
Fe₂O₃: 0.2-35.6% by weight per total weight of the composite hardened body
ZnO: 0.1-3.6% by weight per total weight of the composite hardened body

The reason why the contents of these oxides are limited to the above ranges is due to the fact that when they are outside the above ranges, the strength of the composite hardened body lowers.

Moreover, a more preferable content of each of the above oxides is as follows. It is needless to say that the total content of these oxides does not exceeds 100% by weight.
Na₂O: 0.1-1.2% by weight per total weight of the composite hardened body
MgO: 0.3-11.0% by weight per total weight of the composite hardened body
P₂O₅: 0.1-7.3% by weight per total weight of the composite hardened body
SO₃: 0.1-3.5% by weight per total weight of the composite hardened body
K₂O: 0.1-1.2% by weight per total weight of the composite hardened body
TiO₂: 0.1-8.7% by weight per total weight of the composite hardened body
MnO: 0.1-1.5% by weight per total weight of the composite hardened body
Fe₂O₃: 0.2-17.8% by weight per total weight of the composite hardened body
ZnO: 0.1-1.8% by weight per total weight of the composite hardened body

It can be confirmed whether or not the compound has an amorphous structure by an X-ray diffractometry. That is, when a harrow is observed in a zone of 2θ: 15°-40° by the X-ray diffractometry, the compound has an amorphous structure. In the invention, a crystal body may be included in the amorphous structure in addition to the complete amorphous structure. Concretely, there may be included a crystal body of hydrogen aluminum silicate, kaolinite, zeolite, gehlenite,syn, anorthite, melitite, gehlenite-synthetic, tobermorite, xonotlite or ettringite; a crystal body of an oxide such as SiO₂, Al₂O₃, CaO, Na₂O, MgO, P₂O₅, SO₃, K₂O, TiO₂, MnO, Fe₂O₃, ZnO or the like; a crystal body of CaCO₃ (calsite) or the like.

Although these crystal bodies themselves are not considered to be a strength developing substance, they are considered to have an effect that hardness and density are increased to improve the compression strength or to control the growth of crack, or the like. Moreover, the content of the crystal body is desirable to be 0.1-50% by weight per total weight of the composite hardened body. Because, when the crystal body is too small, the above effect is not obtained, while when it is too large, the strength lowers.

Incidentally, the crystalline compound of Al₂O₃-SiO₂ system is hydrogen aluminum silicate, kaolinite or zeolite, and the crystalline compound of Al₂O₃-CaO system is calcium aluminate, and the crystalline compound o f CaO-SiO₂ system is calcium silicate, and the crystalline compound of Al₂O₃-SiO₂-CaO system is gehlenite,syn or anorthite, and the crystalline compound of Al₂O₃-SiO₂-CaO-MgO system is melitite or gehlenite-synthetic.

Further, the crystal body is desirable to contain Ca, and may include gehlenite,syn (Ca₂Al₂O₇), melitite-synthetic (Ca₂(Mg_{0.5}Al_{0.5})(Si_{1.5}Al_{0.5}O₇)), gehlenite-synthetic (Ca₂(Mg_{0.25}Al_{0.75})(Si_{1.25}Al_{0.75}O₇)), anorthite, ordered (Ca₂Al₂Si₂O₈), or calcium carbonate (calsite). Because, Ca-containing compound has a high strength.

In the composite hardened body according to the invention, a halogen may be added to the amorphous body consisting of at least two oxides. This halogen serves as a catalyst in the reaction of forming a solid solution or a hydrate and also acts as a combustion controlling substance. The content is desirable to be 0.1-1.2% by weight. Because, when it is less than 0.1% by weight, the strength is low, while when it exceeds 1.2% by weight, harmful substances are created by combustion. As the halogen, chlorine, bromine and fluorine are desirable.

Similarly, calcium carbonate (calsite) may be added. Calcium carbonate itself is not a strength developing substance, but is considered to contribute to the increase of the strength because calcium carbonate is surrounded with the amorphous body to prevent the growth of crack or the like. The content of calcium carbonate is desirable to be not more than 48% by weight per total weight of the composite hardened body, because when it exceeds 48% by weight, the bending strength lowers. And also, it is desirable to be not less than 0.1 % by weight. When the content is less than 0.1% by weight, it does not contribute to the increase of the strength.

Furthermore, the addition of a binder is advantageous to a further increase of the strength and the improvement of water resistance, resistance to chemicals and fire resistance. The binder is desirable to be either a thermosetting resin or an inorganic binding agent or both. As the thermosetting resin, at least one resin selected from phenolic resin, melamine resin, epoxy resin and urea resin is desirable. As the inorganic binding agent, at least one selected from sodium silicate, silica gel and alumina zol is desirable.

Moreover, the thermosetting resin, e.g. at least one thermosetting resin selected from phenolic resin, melamine resin, epoxy resin and urea resin may be applied onto the surface.

In an embodiment of the invention, the fibrous material included in the amorphous body may be either organic or inorganic. As the organic fibrous material, at least one selected from chemical fibers such as vinylon, polypropylene, polyethylene and the like and organic fibrous material consisting of a polysaccharide can be used, but the organic fibrous material consisting of a polysaccharide is desirable. Because, the polysaccharide has OH group and easily bonds to various compounds forming inorganic powder such as Al₂O₃, SiO₂, CaO and the like through hydrogen bonding.

The polysaccharide is desirable to be at least one compound selected from amino sugar, uronic acid, starch, glycogen, inulin, lichenin, cellulose, chitin, chitosan, hemicellulose and pectin. As the organic fibrous material consisting of these polysaccharides, pulp, pulp dreg, pulverized mass of a wastepaper such as news paper, magazine or the like are advantageously adaptable.

Incidentally, the pulp contains about 10-30% by weight of lignin in addition to cellulose.

On the other hand, at least one selected from alumina whisker, SiC whisker, silica-alumina based ceramic fiber, glass fiber, carbon fiber and metal fiber can be used as an inorganic fibrous material.

Moreover, the content of the fibrous material is desirable to be 2-75% by weight. When the content is less than 2% by weight, the strength of the composite hardened body lowers, while when it exceeds 75% by weight, there is feared the lowering of fire protecting property, water resistance, dimension stability and the like.

Furthermore, an average length of the fibrous material is desirable to be 10-3000 µm. When the average length is too short, the entanglement is not caused, while when it is too long, gap is apt to be created to lower the strength of the inorganic hardened body.

In a further embodiment of the composite hardened body according to the invention, it is important to include a water absorption preventing agent (inclusive of a water repellant). That is, when the water absorption preventing agent (inclusive of the water repellant) is added to the composite hardened body, the water absorbability of the composite hardened body is first suppressed, so that the lowering of the strength due to water absorption can be avoided. And also, the water absorbing quantity is controlled, so that it is possible to prevent the cracking due to the repetition of freezing and melting of absorbed water.

In order to provide these effects, it is favorable to add not less than 0.1 wt% of the water absorption preventing agent (inclusive of the water repellant) to the composite hardened body, but the addition exceeding 10.0 wt% brings about the lowering of the strength of the composite hardened body, so that the addition amount is 0.1-10 wt%, preferably 0.2-4.0 wt%.

The water absorption preventing agent has a function and effect of preventing the penetration of water into the inside of the composite hardened body and can concretely use rosin family, paraffin family (paraffin wax), silicone family, aliphatic acid family (aliphatic acid derivative), acrylic family, lecithin family, latex family, reactive sizing agent, stearic acid family (calcium stearate), modified petroleum resin family, microwax family, silane family, polyvinyl chloride, polyvinyl acetate, epoxy resin, urethane resin, styrene family, methacrylic acid family, starch family, polyimide family, polyester family, phenolic resin family, succinic acid family and the like.

And also, the water repellant is uniformly added to the composite hardened body or may be added to only a surface layer of the composite hardened body. That is, ① a given amount of the water repellant is mixed and uniformly added in the compounding of starting materials to disperse the water absorption preventing agent for shaping. Alternatively, ② a given amount of the water repellant is applied onto the surface layer of the composite hardened body with a brush, a roll, a spray or the like, and dried, hardened by heating, cured and the like to form a film.

As the above composite hardened body, there are recommended ones obtained by drying, aggregating and hardening an industrial waste, and one obtained by drying, aggregating and hardening a paper-making sludge (scum) is particularly optimum. That is, the paper-making sludge is a pulp dreg containing inorganic mass, and is low in the cost for using the industrial waste as a starting material, and contributes to the solution of environmental problems. And also, the paper-making sludge itself has a function as a binder and has a merit capable of shaping into a desired form by kneading with the other industrial waste.

Moreover, the water absorption preventing agent is applied by (i) a method wherein the water absorption preventing agent is directly added to or diluted with water, a solvent or the like and added to starting materials in the compounding of the starting materials and then uniformly mixed, or (ii) a method wherein the surface of the composite hardened body after the shaping of the composite hardened body is coated with a given amount of the agent through a brush, a roll, a spray or the like, dried or hardened by heating or cured to form a coated film or a thin layer. Particularly, the water absorption preventing agent layer may be formed on the surface of the composite hardened body by the method (ii). The amount applied is desirable to be 10-200 g/m². When it is less than 10 g/m², there is no effect of preventing water absorption, while when it exceeds 200 g/m², the degradation of the composite hardened body is caused due to the water absorption of the resin itself.

In general, the paper-making sludge contains water and at least one selected from a halogen, calcium carbonate and oxides or hydroxides of Al, Si, Ca, Na, Mg, P, S, K, Ti, Mn, Fe and Zn such as crystals or sol substance as an oxide precursor or composite of Al₂O₃, SiO₂, CaO, Na₂O, MgO, P₂O₅, SO₃, K₂O, TiO₂, MnO, Fe₂O₃ and ZnO in addition to the pulp. Especially, the wastepaper of high-grade paper contains a great amount of calcium based crystal such as kaoline, calcium carbonate or the like, so that a sludge containing a great amount of the wastepaper is suitable as the paper-making sludge. Moreover, chlorine, bromine and fluorine are desirable as the halogen.

And also, the water content in the paper-making sludge is desirable to be 20-95% by weight. When the water content is less than 20% by weight, the sludge is too hard and the shaping thereof is difficult, while when it exceeds 95% by weight, the sludge is rendered into a slurry and the shaping thereof is difficult.

More preferably, the water content in the paper-making sludge is 20-80% by weight.

Moreover, techniques relating to the hardened body using the paper-making sludge are found here and there, but they are different from the invention.

For example, JP-A-49-86438 discloses a hardened body obtained by mixing and hot-pressing a pulp dreg (cellulose component) and a lime dreg (calcium carbonate), but the pulp dreg means a cellulose and does not correspond to the utilization of inorganic component in the paper-making sludge as defined in the invention and the dispersion of fibers in the inorganic amorphous body. Therefore, breakage is caused at the grain boundary of the lime dreg or the growth of crack can not be prevented, and the bending strength and compression strength are poor. And also, the lime dreg is crystalline but is not an amorphous body as defined in the invention.

JP-A-5-270872, JP-A-6-293546, JP-A-7-47537 and JP-A-7-69701 are a composite technique of cement and inorganic reinforcing fibers, which are different from the dispersion of fibrous materials into inorganic amorphous body as defined in the invention.

JP-A-10-15923 is a technique of mixing a pulp sludge with a crystalline gypsum, which is different from the dispersion of fibrous materials into inorganic amorphous body as defined in the invention.

JP-A-51-30088 is a technique of shaping a fired ash of a pulp waste and a light inorganic material, but the firing conditions and the like are not described and an amorphous fired ash can not bed obtained.

JP-A-49-2880 is a technique aiming at only fibers in the pulp waste, which is different from the dispersion of fibrous materials into inorganic amorphous body as defined in the invention.

JP-A-53-81388 discloses that fibers in the pulp dreg (fiber 20%, earth and sand 0.01%) are mixed with wood chips and shaped, which is different from the dispersion of fibrous materials into inorganic amorphous body as defined in the invention.

JP-A-8-246400 is a technique of using wastepaper pulp itself (only cellulose) instead of the paper-making sludge.

JP-A-48-44349 is a technique of mixing a pulp waste containing organic mass and inorganic mass with a high polymer emulsion or the like. The inorganic mass means silicon oxide, aluminum oxide and iron oxide and indicates substantially a single body of a crystalline metal oxide, which is different from a complicated amorphous system constructed by bonding two or more metal oxides as defined in the invention.

JP-A-49-99524 is a ceramic formed substrate (polycrystalline body), which is different from the amorphous system as defined in the invention.

In the composite hardened body 1, it is more favorable to include inorganic grains or inorganic powder 4 as shown in Fig. 2. Such an inclusion of the inorganic grain or inorganic powder 4 is advantageous to improve the fire resistance or to increase the strength by reacting with an amorphous body to form a strength developing substance. By adjusting an amount of the inorganic grain or inorganic powder can be adjusted the specific gravity and porosity of the composite hardened body.

The composite hardened body 1 comprises inorganic powder 4 and organic fibrous materials 3 consisting of a polysaccharide as shown in Fig. 2, and may added with a binder, if necessary. In case of Fig. 2, the inorganic amorphous body 2 also serves as a binder.

Since OH groups are existent in the inorganic powder and the organic fibrous material consisting of the polysaccharide, the inorganic powder and the organic fibrous material, or the organic fibrous materials are complicatedly entangled with each other through hydrogen bonding to compositely and integrally unite them with each other. For this end, the strength can be ensured and the workability and productivity are improved without using cement or a reinforcing plate such as iron plate or the like. And also, the value of toughness at break is increased by the organic fibrous material and the growth of crack is obstructed by the inorganic powder, so that the crack resistance is improved.

Furthermore, the inorganic powder is advantageous to improve the fire resistance or to react with the amorphous body to form a strength developing substance for increasing the strength as previously mentioned, so that the specific gravity and porosity of the composite hardened body may be adjusted by adjusting the amount of the inorganic powder.

As the inorganic grain or inorganic powder, use may be made of at least one selected from calcium carbonate, calcium hydroxide, white sand, white sand balloon, perlite, aluminum hydroxide, silica, alumina, talc, calcium carbonate and industrial waste powder. As the industrial waste powder, it is particularly desirable to use at least one industrial waste powder selected from fired powder of inorganic mass (the above amorphous body) contained in the paper-making sludge, fired powder of paper-making sludge, polished dust of glass and pulverized dust of silica sand. Because, the use of these industrial waste powders can realize the reduction of the cost and further contribute to the solution of environmental problems.

The fired powder of the paper-making sludge has approximately the same composition as the amorphous body. However, it is desirable to have the following composition as converted by Na₂O, MgO, P₂O₅, SO₃, K₂O, TiO₂, MnO, Fe₂O₃ and ZnO:
Na₂O: 0.1-2.4% by weight per total weight of the composite hardened body
MgO: 0.3-22.0% by weight per total weight of the composite hardened body
P₂O₅: 0.1-14.6% by weight per total weight of the composite hardened body
SO₃: 0.1-7.0% by weight per total weight of the composite hardened body
K₂O: 0.1-2.4% by weight per total weight of the composite hardened body
TiO₂: 0.1-17.4% by weight per total weight of the composite hardened body
MnO: 0.1-3.0% by weight per total weight of the composite hardened body
Fe₂O₃: 0.2-35.6% by weight per total weight of the composite hardened body
ZnO:0.1-3.6% by weight per total weight of the composite hardened body

Moreover, the inorganic powder through the firing of the paper-making sludge is obtained by subjecting the paper-making sludge to a heating treatment at 300-1500°C. The thus obtained inorganic powder is amorphous and is excellent in the strength and toughness and is small in the density, so that the weight reduction can be realized by dispersing in the composite hardened body. And also, when the paper-making sludge is fired at not lower than 300°C but lower than 800°C, or when it is heated at 300-1500°C and then rapidly cooled, the resulting inorganic powder surely contains an amorphous body and is advantageous.

The inorganic grain or inorganic powder is desirable to have a specific surface area of 0.8-100 m²/g. When it is less than 0.8 m²/g, the contact area between the amorphous body and the inorganic powder becomes small and the strength lowers, while when it exceeds 100 m²/g, the effect of preventing the growth of crack or increasing hardness lowers and finally the strength lowers.

The specific surface area of the inorganic grain or inorganic powder is more preferable to be 1.6-100 m²/g.

Further, the inorganic powder is desirable to contain at least one inorganic mass selected from silica, alumina, iron oxide, calcium oxide, magnesium oxide, potassium oxide, sodium oxide and phosphorus pentaoxide. These inorganic masses are chemically stable, excellent in the weather resistance and have properties desired as an industrial material such as building materials and the like.

When the average grain size of the inorganic grain or inorganic powder is too small or large, sufficient strength is not obtained, so that it is desirable to be within a range of 1-100 µm. And also, the content of the inorganic grain or inorganic powder is desirable to be 10-90% by weight. That is, when the inorganic powder is too small, the strength lowers, while when the content of the inorganic powder is too large, brittleness is caused and in any case, the strength lowers.

The composite hardened body according to the invention is utilized in various industries and can be used in new building materials instead of calcium silicate board, perlite board, plywood, gypsum board and the like as well as medical materials such as artificial limb, artificial bone, dental plant and electronic materials such as core substrate for printed wiring board, interlaminar resin insulating layer and the like.

The invention will be described with respect to building materials as an application example of the composite hardened body below.

A plate-shaped building material according to the invention can be obtained by shaping a core material made of the composite hardened body according to the invention into a plate.

And also, a composite building material according to the invention is constructed by forming a reinforcing layer 6 on at least one surface of a core material 5 as shown in Fig. 3, both surfaces thereof in the illustrated embodiment, wherein the composite hardened body 1 according to the invention is applied to the core material 5. That is, when the core material 5 is made of the composite hardened body 1 according to the invention, even if tensile force is applied to the core material, the breakage is not easily caused because the core material itself is excellent in the bending strength and the reinforcing layer 6 is disposed on the surface of the core material. And also, even if pressure is locally applied to the surface, there is not created dent or depression.

In the use of the composite building material according to the invention, a decorative layer is formed on the reinforcing layer 6 by painting or through a decorative plate, a decorative panel or the like, so that the shock resistance is improved, and the damage such as dent or the like hardly occurs and the decorative face is not strained by the damage to cause no lowering of designing property.

And also, the reinforcing layer 6 has a structure of embedding fiber-based materials 6b in a resin 6a. As the resin 6a, it is particularly desirable to use a thermosetting resin. Because, the thermosetting resin is excellent in the fire resistance and is not softened even at a higher temperature as compared with a thermoplastic resin and does not lose the function as the reinforcing layer. As the thermosetting resin, a phenolic resin, a melamine resin, an epoxy resin, a polyimide resin, a urea resin or the like is adaptable. In order to give sufficient stiffness and shock resistance and higher fire resistance to the reinforcing layer, the content of the thermosetting resin in the reinforcing layer is desirable to be within a range of 10% by weight to 65% by weight.

On the other hand, inorganic fibers are desirable to be used as the fiber-based material 6b. Because, they can increase the strength of the reinforcing layer 6 and reduce the thermal expansion coefficient thereof. As the inorganic fiber, use may be made of glass fiber, rock wool and ceramic fiber, which are low in the cost and excellent in the heat resistance and strength. As the fiber-based material, matt-shaped product of discontinuous fibers, matt-shaped product formed by cutting continuous long fibers to 3-7 cm (so-called chopped strand matt), sheet-shaped product after the dispersion in water, matt-shaped product by laminating continuous long fiber in an eddy form, or a woven product of continuous long fiber can be used.

Further, the thickness of the reinforcing layer is desirable to be 0.2 mm - 3.5 mm. When it is set to the above range, sufficient stiffness and shock resistance are obtained, and a high workability can be maintained. Moreover, a fire retardant such as aluminum hydroxide, magnesium hydroxide or the like, and a usually used inorganic binding agent such as silica sol, alumina sol, water glass or the like may be added to the reinforcing layer.

The reinforcing layer is desirable to contain an elastic high polymer. In this case, even when nails are struck, there is not caused crack around the nail, and also the elastic high polymer can ensure a friction force to the surface of the nail to improve the holding force of the nail.

As such a resin, a resin composition consisting of a thermosetting resin and an elastic high polymer for giving a force durable to nail is desirable. That is, it is a product obtained by dispersing an emulsion of an elastic high polymer into an uncured solution of a thermosetting resin. By curing such a resin, "islands" of the elastic high polymer are dispersed in "sea" of thermosetting resin matrix, whereby the strength of the resin is ensured and the toughness can be provided.

The elastic high polymer is desirable to be rubbery latex, acrylic latex, acrylate latex, or urethane latex. Because, they can be dispersed in the uncured solution of the thermosetting resin in form of a liquid. And also, the thermosetting resin and the elastic high polymer are liquid and have a merit of easily impregnating into a porous substrate or a fibrous substrate.

As the rubbery latex, nitrile-butadiene rubber (NBR) and styrenebutadiene rubber (SBR) are favorable. As the thermosetting resin, a phenolic resin, a melamine resin, an epoxy resin, a polyimide resin and the like are favorable.

It is desirable that a weight ratio of the thermosetting resin to the elastic high polymer as a solid content is 95/5-65/35. When the content of the thermosetting resin is too large, the toughness lowers and the crack is easily created and the holding force of nail lowers, while when the content of the elastic high polymer is too large, the resin strength lowers and the holding force of nail lowers. Thus, the holding force of nail is optimum when the weight ratio as solid content of thermosetting resin to elastic high polymer is 95/5-65/35.

In the invention, the composite hardened body is used as a core material and may be provided on at least one surface thereof with a decorative layer.

As the decorative layer, use may be made of at least one resin based decorative layer selected from melamine resin paint, melamine resin impregnated paper, polyester resin paint, diallylphthalate resin impregnated paper, ultraviolet ray setting resin paint, vinyl chloride resin film, urethane resin film, polyacrylurethane, vinyl fluoride resin film and decorative plate, natural wood single plate (rose, teak, pine, shelf, oak, Japanese cryptmeria), natural stone, artificial stone, carpet, vinyl chloride tile, cloth carpet, decorative plywood, tatami matt and the like.

As the decorative plate, use may be made of a decorative plate of three layer structure consisting of a phenolic resin impregnated core layer, a melamine resin impregnated pattern layer and a melamine resin impregnated overlay layer, and a decorative plate of four layer structure consisting of a melamine resin impregnated backer layer, a phenolic resin impregnated core layer, a melamine resin impregnated pattern layer and a melamine resin impregnated overlay layer. Particularly, the decorative plate having the phenolic resin impregnated core layer as a core layer can be applied to a floor member or the like because the surface strength becomes considerably high. The thickness of the decorative plate is desirable to be 0.1-10 mm.

Moreover, it is desirable in the building material according to the invention that a reinforcing layer made of a resin and fibrous materials is formed between the core material and the decorative layer. Because, the shock resistance can be more improved and it is possible to apply to a floor member requiring a severer durability. As the resin constituting the reinforcing layer, a thermosetting resin is desirable. The thermosetting resin is excellent in the fire resistance and does not soften even at a higher temperature and lose the function as a reinforcing layer as compared with the thermoplastic resin.

Further, the composite hardened body according to the invention can be supplied to a composite building material by adhering a waterproof paper onto at least one surface thereof for improving a water resistance and a strength.

And also, a thermosetting resin, for example, at least one thermosetting resin selected from phenolic resin, melamine resin, epoxy resin and urea resin may be applied onto the surface of the composite hardened body instead of the formation of the reinforcing layer.

On the other hand, the thickness of the plate-shaped building material according to the invention is desirable to be 3-30 mm. When it is less than 3 mm, the strength lowers, while when it exceeds 30 mm, the corresponding strength is not obtained.

Various embodiment on the production method of the composite hardened body according to the invention and various embodiments on the production method of plate-shaped building material and composite building material using the composite hardened body according to the invention will be described below.

At first, the production method of the composite hardened body is, for example, as follows.

That is, a paper-making sludge is used as a starting material for the composite hardened body. As the paper-making sludge, it is desirable to use a paper-making sludge discharged in the paper-making of printing-information paper, kraft paper, titanium paper, facial paper, tissue paper, toilet paper, sanitary paper, toweling paper, various industrial papers or various domestic papers. As a commercially available paper-making sludge, there can be used "Cyclon ash", "Green sludge" and the like handled by Maruto Yozai-sha.

Such a paper-making sludge is shaped into a desired form by a method of pressing to remove water to a certain level after being poured into a desired molding frame or a molding frame provided with a filter-like bottom plate, or a method of paper-making a slurry of a paper-making sludge in a conventionally known Fourdrinier or cylinder type paper machine, or the like. Then, the thus shaped body is placed on a usual base plate or a filter-like base plate and press-tightened under a pressure of 10-300 kgf/cm² by pressing with a usual pressurizing piece (pressurizing member) or a filter-like pressurizing piece to conduct pressurization and dehydration and dried arid hardened at a heating temperature of 20-160°C to obtain a composite hardened body 1. When the heating temperature is too high, deformation, cracking or the like is caused, while when it is too low, a long time is taken in the drying and the productivity lowers. Moreover, the term "press-tightening" means that the shaped body is kept while applying the pressure.

By such a press-tightening are oriented the fibrous materials in a direction perpendicular to the pressurizing direction. Since water can be removed by applying the pressure, the excessive progressing of crystallization due to the entrapping of water can be prevented to adequately form an amorphous body. And also, the bending strength can be increased by such an orientation.

Moreover, the addition or application of the water absorption preventing agent is conducted as previously mentioned.

Especially, when the composite hardened body is shaped into a plate as a core material for the plate-shaped building material or composite building material, the paper-making sludge is shaped into a sheet by a conventionally known method such as dehydration press method, cylinder paper method, Fourdrinier paper method, extrusion shaping method or the like and then dried, or the paper-making sludge is pushed by rolls while transferring through a conveyor to form a sheet-shaped body, and then the thus sheet-shaped body is heated at a heating temperature of 80-160°C while press-tightening on a base plate to conduct pressurization and dehydration as mentioned above to form a plate-shaped core material. In this case, a pressure is suitable to be 1-400 kgf/cm², preferably 1-300 kgf/cm². By properly changing the pressure can be adjusted the specific gravity. For example, the specific gravity is approximately 1.4 at 350 kgf/cm².

As the adjusting method of the specific gravity, there are a method of adding inorganic powder, a method of adding various foaming agents to form bubbles in an inorganic amorphous body and the like in addition to the change of the pressure in the pressurization.

Moreover, according to the method of the invention, inorganic grains 4 may be added and mixed with the paper-making sludge and then press-tightened and hardened by heating while conducting the pressurization and hydration. In this way, the inorganic grains 4 may be dispersed in the composite hardened body 1.

And also, according to the method of the invention, after the sheet-shaped body of the paper-making sludge is press-tightened to conduct pressurization and dehydration, the shaped body may be dried and hardened by heating.

Even in these cases, the bending strength can be increased by the orientation through press-tightening.

According to the production method of the composite hardened body according to the invention, the shaped body is pressurized under a high pressure as mentioned above, so that the dehydration of the shaped body can rapidly be conducted and the formation reaction of the inorganic amorphous body can be promoted.

If the hardening is carried out without pressurization, a domain is created as a portion of particularly gathering the inorganic amorphous body at a dense state, so that crack is apt to be caused unless a binder is added separately. On the contrary, when the hardening is carried out by the pressurization, inconvenience due to the occurrence of the domain can be avoided.

Furthermore, the porosity of the composite hardened body can be lowered to increase the strength by the pressurization, while the complete crystallization of the inorganic amorphous body can be prevented by removing water and hence a part of the body is obtained as a crystal body and can bring about the prevention of crack growth and increase of compression strength.

Moreover, after the dehydration is conducted by the pressurization, the drying and hardening may be carried out at a state of applying pressure, or may be conducted while applying pressure.

In the composite hardened body according to the invention, a metal alkoxide or a metal hydroxide can be used as a starting material in addition to the paper-making sludge. For example, a mixture of alkoxides or hydroxides of Al, Si, Ca is mixed with a pulverized material of wastepaper and subjected to hydrolysis and polymerization reactions in the presence of an acid or an alkali to form a sol, and then the sol can be gelated by drying and hardening.

The thus obtained gel is guessed to be the same as a compound obtained by subjecting an oxide(s) of Al₂O₃, SiO₂, CaO, Na₂O, MgO, P₂O₅, SO₃, K₂O, TiO₂, MnO, Fe₂O₃, ZnO and the like to solid solution or hydration reaction.

And also, the composite building material is produced, for example, as follows.

Firstly, the paper-making sludge is shaped into a sheet by a conventionally known method such as cylinder paper method, Fourdrinier paper method, dehydration press method, extrusion shaping method or the like, or the paper-making sludge or a mixture is pushed by rolls while transferring through a conveyor to form a sheet-shaped body. On the other hand, a resin is impregnated in a fibrous material, subjected to a heating treatment at 25-70°C and dried to form a reinforcing sheet. Then, the sheet-shaped body and the reinforcing sheet are laminated and press-tightened and heated while conducting pressurization and dehydration to form a composite building material consisting of a core material 5 (composite hardened body) and a reinforcing layer 6. In this case, the heating temperature is 80-200°C, and the pressure is 1-400 kgf/cm², preferably about 1-300 kgf/cm².

By such a press-tightening is oriented the fibrous materials as previously mentioned, whereby the bending strength can be increased, while water can be removed by the pressurization, so that there can be prevented the excessive progress of crystallization due to the entrapment of water.

When the sheet-shaped body or the like of the paper-making sludge is press-tightened while conducting the pressurization and dehydration and then the shaped body is dried and hardened, the pressure for the dehydration is suitable to be about 10-100 kgf/cm². When it is less than 10 kgf/cm², the dehydration is incomplete and the crystallization progresses, while when it exceeds 100 kgf/cm², the orientation of the fibrous materials excessively progresses and layer-like peeling is caused in the drying and hardening.

Moreover, a method wherein a resin composition is impregnated in a matt of inorganic fibers and dried and hot pressed to cure a thermosetting resin to thereby form a reinforcing layer and then the resulting reinforcing layer is adhered to a previously hardened core material with an adhesive can be used instead of the above production method.

And also, there can be adopted a method wherein a thermosetting resin such as a phenolic resin or the like is separately coated onto surfaces of fibers such as glass fiber, rock wool or ceramic fiber and a fibrous material comprised of these fibers is laminated on a sheet-shaped body and then hot pressed. In the method of coating the thermosetting resin on the fiber surfaces at a separate step, the adhesion property to the impregnated resin is improved, and also the fibers are easily adhered with each other and further the impregnating ratio of the resin can advantageously be improved.

As such a coating method, there are a method wherein an uncured thermosetting resin is impregnated into the fibrous materials and then dried, and a method wherein a starting melt for glass fiber, rock wool or ceramic fiber is discharged through a nozzle and fibered through a blowing process or a centrifugal process and at the same time a solution of a thermosetting resin such as phenolic resin or the like is sprayed thereto.

Moreover, when the glass fiber, rock wool or ceramic fiber is used as a substance constituting the fibrous material, it is favorable to coat a silane coupling agent. The thus obtained composite building material may be subjected to a painting on its front and rear surfaces, or may be adhered with a decorative plate, a single decorative plate or the like through an adhesive.

The painting is carried out by printing or spraying various pigments, an ink or the like. As the decorative plate, use may be made of a decorative plate of three layer structure consisting of a phenolic resin impregnated core layer, a melamine resin impregnated pattern layer and a melamine resin impregnated overlay layer, and a decorative plate of four layer structure consisting of a melamine resin impregnated backer layer, a phenolic resin impregnated core layer, a melamine resin impregnated pattern layer and a melamine resin impregnated overlay layer. Particularly, the decorative plate having the phenolic resin impregnated core layer as a core layer can be applied to a floor member or the like because the surface strength becomes considerably high.

As the single decorative plate, high-grade woods of cryptomeria, cypress and the like can be used.

Moreover, the thermosetting resin, for example, at least one thermosetting resin selected from phenolic resin, melamine resin, epoxy resin and urea resin may be applied onto the surface of the composite hardened body as previously mentioned instead of the formation of the reinforcing layer.

And also, the composite hardened body according to the invention may contain various inks and pigments.

### BRIEF DESCRIPTION OF THE DRAWINGS

Fig. 1 is a diagrammatically section view of an embodiment of the composite hardened body according to the invention.
Fig. 2 is a diagrammatically section view of an embodiment of the composite hardened body according to the invention.
Fig. 3 is a diagrammatically section view of an embodiment of the composite hardened body according to the invention.
Fig. 4 is an X-ray diffraction chart of the composite hardened body of Example 1.
Fig. 5 is an X-ray diffraction chart of the composite hardened body of Example 5.

### BEST MODE FOR CARRYING OUT THE INVENTION

### (Example 1-1)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 51.4% by weight | MgO | 1.4% by weight |
| SiO₂ | 24.2% by weight | SO₃ | 0.5% by weight |
| Al₂O₃ | 14.0% by weight | P₂O₅ | 0.2% by weight |
| CaO | 8.0% by weight | Cl | 0.2% by weight |
| TiO₂ | 1.0% by weight | ZnO | 0.1% by weight |
| | | Others | slight |

Moreover, when a side face of the composite hardened body is observed by means of an optical microscope (50 magnification), the fibers are oriented in a direction perpendicular to the pressure applying direction.

### (Example 1-2)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 46.0% by weight | TiO₂ | 1.0% by weight |
| Al₂O₃ | 14.0% by weight | SO₃ | 1.0% by weight |
| Al₂O₃ | 14.0% by weight | SO₃ | 1.0% by weight |
| CaO | 8.0% by weight | P₂O₅ | 0.2% by weight |
| Na₂O | 0.2% by weight | Cl | 0.3% by weight |
| K₂O | 0.2% by weight | Others | slight |
| Fe₂O₃ | 0.2% by weight | | |

### (Example 1-3)

103 parts by weight of a fired paper-making sludge ("Cyclon ash" handled by Maruto Yozai-sha) is kneaded with 1209 parts by weight of the unfired paper-making sludge of Example 1-1.

Moreover, the composition of the fired sludge as converted to each oxide is as follows as a result of an analysis using a fluorescent X-ray analyzing apparatus (RIX2100, made by Rigaku).

| (Fired product of paper-making sludge) | | | |
|---|---|---|---|
| SiO₂ | 34.1% by weight | MgO | 6.0% by weight |
| Al₂O₃ | 20.7% by weight | P₂O₅ | 2.7% by weight |
| Fe₂O₃ | 12.4% by weight | TiO₂ | 1.0% by weight |
| CaO | 21.3% by weight | SO₃ | 0.5% by weight |
| | | Cl | 0.2% by weight |
| | | ZnO | 0.1% by weight |
| | | Others | slight |

Moreover, an average grain size is 11.0 µm, and a true specific gravity is 2.756, and a specific surface area is 19.0 m²/g.

Then, a pressure of 3 kgf/cm² is applied while transferring the kneaded mass through a conveyor to form a sheet-shaped body having a thickness of 10 mm. The sheet-shaped body is heated at 110°C to form a plate-shaped composite hardened body.

### (Example 1-4)

After a phenolic resin solution added with a curing agent is impregnated into a sheet-shaped body of glass fibers (impregnating amount of 45% as solid content), it is dried at a temperature of 80°C for 20 minutes to obtain a reinforcing sheet. Further, a phenolic resin is applied onto front and rear surfaces of a core material and dried at a temperature of 80°C for 20 minutes.

Then, a sheet-shaped body is formed in the same manner as in Example 1-2. Further, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and reinforcing layers laid on the front and rear surfaces thereof and having a thickness of 1 mm. Moreover, a single decorative plate of cryptomeria having a thickness of 0.2 mm is adhered to the front surface of the composite building material through an adhesive of vinyl acetate.

### (Example 1-5)

1512 parts by weight of the unfired paper-making sludge of Example 1-1 and 378 parts by weight of phenolic resin are kneaded to obtain a kneaded mass. While the resulting kneaded mass is transferred through a conveyor, a pressure of 3 kgf/cm² is applied to form a sheet-shaped body having a thickness of 10 mm. The sheet-shaped body is heated at 110°C to obtain a plate-shaped composite hardened body.

### (Example 1-6)

1200 parts by weight of the unfired paper-making sludge of Example 1-1, 600 parts by weight of phenolic resin and 600 parts by weight of a fired paper-making sludge ("Cyclon ash" handled by Maruto Yozai-sha) are kneaded to obtain a kneaded mass. While the resulting kneaded mass is transferred through a conveyor, a pressure of 3 kgf/cm² is applied to form a sheet-shaped body having a thickness of 10 mm. The sheet-shaped body is heated at 110°C to obtain a plate-shaped composite hardened body.

### (Example 1-7)

The surface of the composite hardened body of Example 1-1 is coated with 100 g/m² of phenolic resin (HP-3000A, made by Asahi Yukizai Kogyo Co., Ltd.) and dried at a temperature of 80°C for 20 minutes. Then, the composite hardened body of Example 1-1 and the hardened body treated with phenol resin (Example 1-7) are immersed in water for 24 hours to measure bending strength thereof. As a result, the bending strength is 137 kgf/cm² in Example 1-1 and 295 kgf/cm² in Example 1-7. That is, it has been confirmed that the moisture resistance can be improved by applying the resin.

### (Example 1-8)

This example is fundamentally the same as Example 1-1, except that water is added to the paper-making sludge to form a slurry having a solid content of 15% by weight and 1500 kg of this slurry is transferred through a conveyor while applying a pressure of 63 kgf/cm² (6.17 MPa) by a dehydration press process to obtain a sheet-shaped body having a thickness of 10 mm. Then, the sheet-shaped body is dried by heating at 100°C to obtain a composite hardened body.

### (Example 1-9)

This example is fundamentally the same as Example 1-2, except that water is added to the paper-making sludge to form a slurry having a solid content of 20% by weight and 3000 kg of this slurry is transferred through a conveyor while applying a pressure of 52 kgf/cm² (5.10 MPa) by a dehydration press process to obtain a sheet-shaped body having a thickness of 10 mm. Then, the sheet-shaped body is dried by heating at 100°C to obtain a composite hardened body.

### (Example 1-10)

This example is fundamentally the same as Example 1-3, except that 103 parts by weight of the fired paper-making sludge, 1800 parts by weight of the unfired paper-making sludge of Example 1-1 and 4500 parts by weight of water are kneaded to obtain a slurry. Then, a pressure of 25 kgf/cm² (2.45 MPa) is applied to the slurry by a dehydration press process to obtain a sheet-shaped body having a thickness of 10 mm. Then, the sheet-shaped body is dried by heating at 100°C to obtain a composite hardened body.

### (Example 1-11)

This example is fundamentally the same as Example 1-5, except that 1800 parts by weight of the unfired paper-making sludge of Example 1-1, 250 parts by weight of phenolic resin and 4500 parts by weight of water are kneaded to obtain a slurry. Then, a pressure of 20 kgf/cm² (1.96 MPa) is applied to the slurry by a dehydration press process to obtain a sheet-shaped body having a thickness of 20 mm. Then, the sheet-shaped body is dried by heating at 110°C to obtain a composite hardened body.

### (Comparative Example 1-1)

A slurry is prepared by mixing 60 parts by weight of a fired scum, 36 parts by weight of water, 100 parts by weight of a cement and 0.3 part by weight of vinylon fibers in a forced agitating mixer for 3 minutes.
The slurry is poured into a mold and pressurized under 150-180 kgf/cm² and taken out therefrom.

### (Comparative Example 1-2)

A fused slug of lime-based sewage sludge (produced by the Osaka Sewerage Public Corporation and having the following main chemical components) is pulverized in a ball mill. 5 parts by weight of the pulverized product having a specific surface area of 0.35 m²/g (blaine value: 3500 cm²/g) is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

With respect to the composite hardened bodies and composite building materials obtained by the above examples and comparative examples, tests are made to measure bending strength, compression strength, workability and nail striking property. The results are shown in Table 1. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a nail embedded depth and presence or absence of crack.

**Table 1**

| | Bending strength (kgf/cm²) | Compression strength (kgf/cm²) | Workability | Nail striking property |
|---|---|---|---|---|
| Example 1-1 | 238 | 851 | cuttable | go through absence of crack |
| Example 1-2 | 250 | 850 | cuttable | go through absence of crack |
| Example 1-3 | 182 | 817 | cuttable | go through absence of crack |
| Example 1-4 | 536 | 824 | cuttable | go through absence of crack |
| Example 1-5 | 240 | 850 | cuttable | go through absence of crack |
| Example 1-6 | 185 | 810 | cuttable | go through absence of crack |
| Example 1-7 | 295 | 805 | cuttable | go through absence of crack |
| Example 1-8 | 320 | 833 | cuttable | go through absence of crack |
| Example 1-9 | 281 | 797 | cuttable | go through absence of crack |
| Example 1-10 | 192 | 813 | cuttable | go through absence of crack |
| Example 1-11 | 265 | 833 | cuttable | go through absence of crack |
| Comparative Example 1-1 | 103 | 796 | no cut | go through presence of crack |
| Comparative Example 1-2 | 97 | 753 | no cut | go through presence of crack |

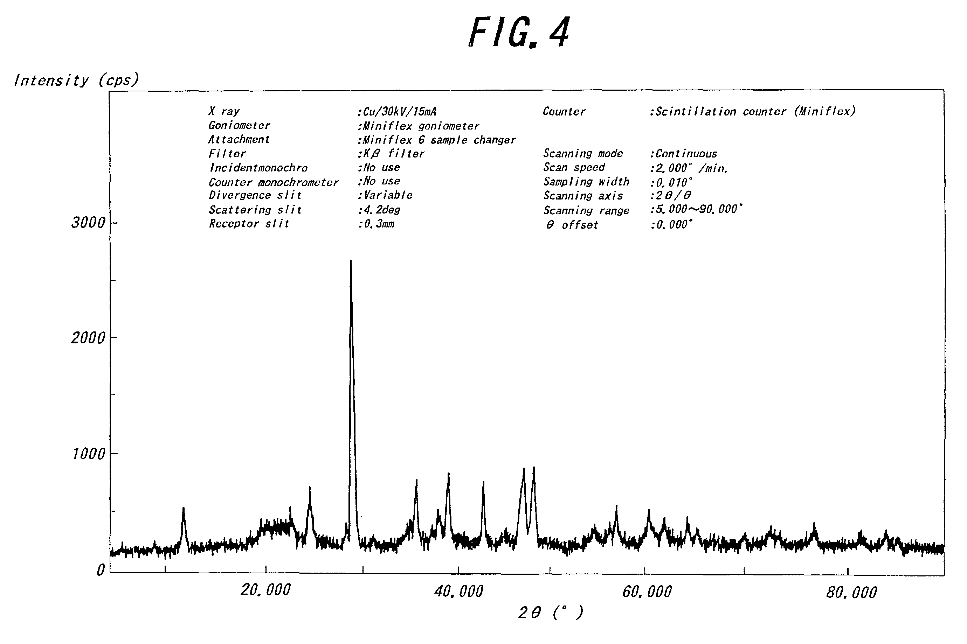

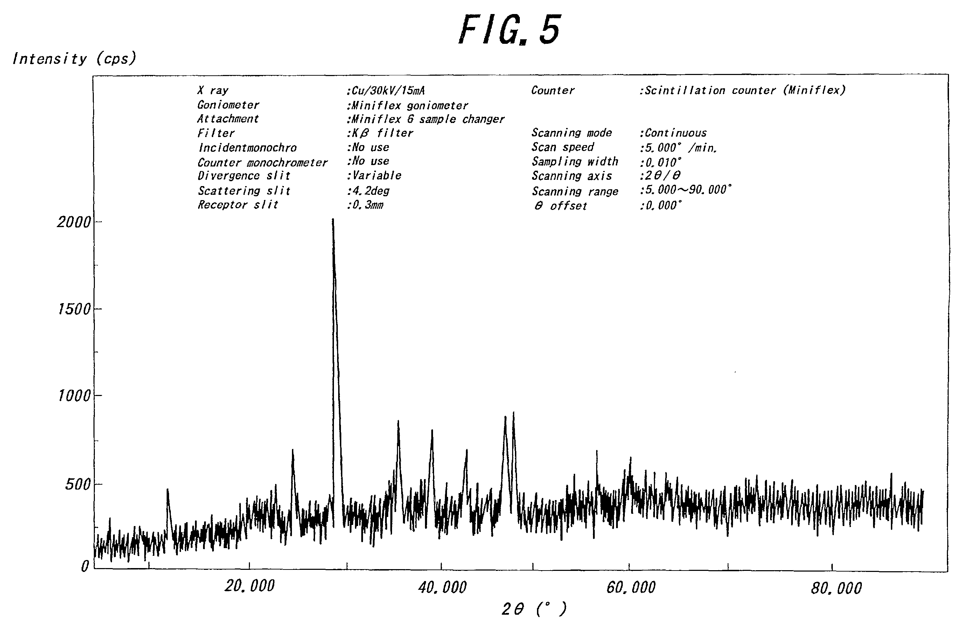

And also, the crystalline structures of the composite hardened bodies of Example 1-1 and Example 1-3 are confirmed by an X-ray diffractometry. The X-ray diffraction charts are shown in Figs. 4 and 5, respectively. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, crystal of calcium carbonate (calsite), kaolinite and crystal body of SiO₂ are identified from the peaks. The content of calcium carbonate is 9.8% by weight to the composite hardened body as a conversion value.

### (Example 2-1)

There is provided 1512 g of an unfired paper-making sludge ("Green sludge" handled by Maruto Yozai-sha, solid content: 34% by weight, water content: 66% by weight). Then, a pressure of 10 kgf/cm² is applied while transferring the paper-making sludge through a conveyor to form a sheet-shaped body having a thickness of 10 mm. The sheet-shaped body is dried by heating at 100°C to form a plate-shaped composite hardened body for a plate-shaped building material.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 51.4% by weight | SO₃ | 0.5% by weight |
| SiO₂ | 24.2% by weight | P₂O₅ | 0.2% by weight |
| Al₂O₃ | 14.0% by weight | Cl | 0.2% by weight |
| CaO | 8.0% by weight | ZnO | 0.1% by weight |
| MgO | 1.4% by weight | Others | slight |
| TiO₂ | 1.0% by weight | | |

When a side face of the composite hardened body is observed by means of an optical microscope, the fibers are oriented in a direction perpendicular to the pressure applying direction.

### (Example 2-2)

There is provided 1512 g of an unfired paper-making sludge ("Green sludge" handled by Maruto Yozai-sha, solid content: 34% by weight, water content: 66% by weight). Then, a pressure of 10 kgf/cm² is applied while transferring the paper-making sludge through a conveyor to form a sheet-shaped body having a thickness of 10 mm. The sheet-shaped body is dried by heating at 100°C to form a plate-shaped composite hardened body for a plate-shaped building material. Moreover, the paper-making sludge used in Example 2-2 and the paper-making sludge used in Example 2-1 are the same trade name "Green sludge", but are discharged from different paper-making factories, respectively.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 46.0% by weight | Cl | 0.3% by weight |
| SiO₂ | 24.2% by weight | Na₂O | 0.2% by weight |
| Al₂O₃ | 14.0% by weight | K₂O | 0.2% by weight |
| CaO | 8.0% by weight | Fe₂O₃ | 0.2% by weight |
| MgO | 4.6% by weight | P₂O₅ | 0.2% by weight |
| TiO₂ | 1.0% by weight | Others | slight |
| SO₃ | 1.0% by weight | | |

### (Example 2-3)

103 parts by weight of a fired paper-making sludge ("Cyclon ash" handled by Maruto Yozai-sha) is kneaded with 1209 parts by weight of the unfired paper-making sludge of Example 2-1.

Moreover, the composition of the fired sludge of the above paper-making sludge (fired sludge) as converted to each oxide is as follows as a result of an analysis using a fluorescent X-ray analyzing apparatus (RIX2100, made by Rigaku).

| Account | | | |
|---|---|---|---|
| SiO₂ | 34.1% by weight | TiO₂ | 1.0% by weight |
| CaO | 21.3% by weight | SO₃ | 0.5% by weight |
| Al₂O₃ | 20.7% by weight | Cl | 0.2% by weight |
| Fe₂O₃ | 12.4% by weight | ZnO | 0.1% by weight |
| MgO | 6.0% by weight | Others | slight |
| P₂O₅ | 2.7% by weight | | |

Moreover, an average grain size is 11.0 µm, and a true specific gravity is 2.756, and a specific surface area is 19.0 m²/g.

Then, a pressure of 5 kgf/cm² is applied while transferring the kneaded mass through a conveyor to form a sheet-shaped body having a thickness of 10 mm. The sheet-shaped body is heated at 110°C to form a plate-shaped composite hardened body.

### (Example 2-4)

After a phenolic resin solution added with a curing agent is impregnated into a sheet-shaped body of glass fibers (impregnating amount of 45% as solid content), it is dried at a temperature of 85°C for 20 minutes to obtain a reinforcing sheet.

Then, a sheet-shaped body is formed in the same manner as in Example 2-2. Further, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and reinforcing layers laid on the front and rear surfaces thereof and having a thickness of 1 mm. Moreover, a single decorative plate of cryptomeria having a thickness of 0.2 mm is adhered to the front surface of the composite building material through an adhesive of vinyl acetate.

### (Example 2-5)

1512 parts by weight of the unfired paper-making sludge of Example 2-1 and 378 parts by weight of phenolic resin are kneaded to obtain a kneaded mass. While the resulting kneaded mass is transferred through a conveyor, a pressure of 5 kgf/cm² is applied to form a sheet-shaped body having a thickness of 10 mm. The sheet-shaped body is heated at 110°C to obtain a plate-shaped composite hardened body for a plate-shaped building material.

### (Example 2-6)

1200 parts by weight of the unfired paper-making sludge of Example 2-1, 600 parts by weight of phenolic resin and 600 parts by weight of a fired paper-making sludge ("Cyclon ash" handled by Maruto Yozai-sha) are kneaded to obtain a kneaded mass. While the resulting kneaded mass is transferred through a conveyor, a pressure of 3 kgf/cm² is applied to form a sheet-shaped body having a thickness of 10 mm. The sheet-shaped body is heated at 120°C to obtain a plate-shaped composite hardened body for a plate-shaped building material.

### (Example 2-7)

The surface of the composite hardened body of Example 2-1 is coated with 100 g/m² of phenolic resin (HP-3000A, made by Asahi Yukizai Kogyo Co., Ltd.) and dried at a temperature of 80°C for 20 minutes to obtain a composite hardened body.

Then, the composite hardened body of Example 2-1 and the composite hardened body of Example 2-7 are immersed in water for 24 hours to measure bending strength thereof. As a result, the bending strength is 127 kgf/cm² in Example 2-1 and 219 kgf/cm² in Example 2-7. That is, it has been confirmed that the moisture resistance can be improved by applying the resin.

### (Example 2-8)

This example is fundamentally the same as Example 2-1, except that water is added to the paper-making sludge of Example 2-1 to form a slurry having a solid content of 8% by weight and 8000 kg of this slurry is shaped into a sheet-shaped body having a thickness of 10 mm by means of a circle paper machine. Then, the sheet-shaped body is dried by heating at 100°C to obtain a composite hardened body.

### (Example 2-9)

This example is fundamentally the same as Example 2-2, except that water is added to the paper-making sludge to form a slurry having a solid content of 5% by weight and 5000 kg of this slurry is shaped into a sheet-shaped body having a thickness of 10 mm by means of a circle paper machine. Then, the sheet-shaped body is dried by heating at 100°C to obtain a composite hardened body.

### (Example 2-10)

This example is fundamentally the same as Example 2-3, except that 103 parts by weight of the fired paper-making sludge of Example 2-1, 1209 parts by weight of the unfired paper-making sludge of Example 2-1 and 3000 parts by weight of water are kneaded.

Then, a pressure of 35 kgf/cm² (3.43 MPa) is applied to the resulting slurry by a dehydration press process to obtain a sheet-shaped body having a thickness of 10 mm. Then, the sheet-shaped body is dried by heating at 100°C to obtain a plate-shaped composite hardened body.

### (Example 2-11)

This example is fundamentally the same as Example 2-4, except that a plate-shaped composite hardened body is obtained by the same method as in Example 2-10.

### (Example 2-12)

This example is fundamentally the same as Example 2-5, except that 3500 parts by weight of the unfired paper-making sludge of Example 2-1 and 378 parts by weight of phenolic resin are kneaded to obtain a kneaded mass. Then, a pressure of 5 kgf/cm² (0.49 MPa) is applied while transferring the kneaded mass through a conveyor to obtain a sheet-shaped body having a thickness of 10 mm. Then, the sheet-shaped body is dried by heating at 150°C to obtain a plate-shaped composite hardened body.

### (Example 2-13)

This example is fundamentally the same as Example 2-6, except that 2300 parts by weight of the unfired paper-making sludge of Example 2-1, 600 parts by weight of phenolic resin, 600 parts by weight of a fired paper-making sludge and 350 parts by weight of water are kneaded to obtain a kneaded mass. Then, a pressure of 3 kgf/cm² (0.29 MPa) is applied while transferring the kneaded mass through a conveyor to obtain a sheet-shaped body having a thickness of 10 mm. Then, the sheet-shaped body is dried by heating at 120°C to obtain a composite hardened body.

### (Comparative Example 2-1)

A slurry is prepared by mixing 60 parts by weight of a fired scum, 36 parts by weight of water, 100 parts by weight of a cement and 0.3 part by weight of vinylon fibers in a forced agitating mixer for 3 minutes. The slurry is poured into a mold and pressurized under 150-180 kgf/cm² and taken out therefrom.

### (Comparative Example 2-2)

A fused slug of lime-based sewage sludge (produced by the Osaka Sewerage Public Corporation and having the following main chemical components) is pulverized in a ball mill. 5 parts by weight of the pulverized product having a specific surface area of 0.35 m²/g (blaine value: 3500 cm²/g) is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| CaO | 33.9% by weight | Fe₂O₃ | 5.0% by weight |
| SiO₂ | 33.4% by weight | MgO | 2.4% by weight |
| Al₂O₃ | 14.2% by weight | NaO | 0.7% by weight |
| P₂O₅ | 7.0% by weight | K₂O | 0.7% by weight |

With respect to the composite hardened bodies and composite building materials obtained in Examples 2-1 to 2-13 and Comparative Examples 2-1 and 2-2, tests are made to measure bending strength, compression strength, workability and nail striking property. The results are shown in Table 1. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a nail embedded depth and presence or absence of crack.

**Table 2**

| | Bending strength (kgf/cm²) | Compression strength (kgf/cm²) | Workability | Nail striking property |
|---|---|---|---|---|
| Example 2-1 | 238 | 851 | cuttable | go through absence of crack |
| Example 2-2 | 250 | 850 | cuttable | go through absence of crack |
| Example 2-3 | 182 | 817 | cuttable | go through absence of crack |
| Example 2-4 | 473 | 824 | cuttable | go through absence of crack |
| Example 2-5 | 240 | 850 | cuttable | go through absence of crack |
| Example 2-6 | 185 | 810 | cuttable | go through absence of crack |
| Example 2-7 | 219 | 850 | cuttable | go through absence of crack |
| Example 2-8 | 257 | 832 | cuttable | go through absence of crack |
| Example 2-9 | 318 | 790 | cuttable | go through absence of crack |
| Example 2-10 | 172 | 738 | cuttable | go through absence of crack |
| Example 2-11 | 486 | 763 | cuttable | go through absence of crack |
| Example 2-12 | 374 | 736 | cuttable | go through absence of crack |
| Example 2-13 | 230 | 821 | cuttable | go through absence of crack |
| Comparative Example 2-1 | 103 | 796 | no cut | go through presence of crack |
| Comparative Example 2-2 | 97 | 753 | no cut | go through presence of crack |

And also, the crystalline structures of the composite hardened bodies of Example 2-1 and Example 2-3 are confirmed by an X-ray diffractometry. The X-ray diffraction charts are the same as shown in Figs. 4 and 5, respectively. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, crystal of calcium carbonate (calsite), kaolinite and crystal body of SiO₂ are identified from the peaks. The content of calcium carbonate is 9.8% by weight to the composite hardened body as a conversion value.

### (Example 3-1)

There is provided 1510 g of an unfired paper-making sludge ("Green sludge" handled by Maruto Yozai-sha, solid content: 34% by weight, water content: 66% by weight). Then, a pressure of 350 kgf/cm² is applied while transferring the paper-making sludge through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 50.4% by weight | MgO | 1.4% by weight |
| SiO₂ | 25.2% by weight | SO₃ | 0.5% by weight |
| Al₂O₃ | 14.0% by weight | P₂O₅ | 0.2% by weight |
| CaO | 8.0% by weight | Cl | 0.2% by weight |
| TiO₂ | 1.0% by weight | ZnO | 0.1% by weight |
| | | Others | slight |

Since the thus obtained composite hardened body is a rectangular plate, a volume is determined by measuring a length of each side, and further a specific gravity can be calculated by measuring a weight. The specific gravity is 1.5.

Further, when a side face of the composite hardened body is observed by means of an optical microscope (50 magnification), the fibers are oriented in a direction perpendicular to the pressure applying direction.

### (Example 3-2)

There is provided 1515 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| | | | |
|---|---|---|---|
| Pulp | 45.0% by weight | TiO₂ | 1.0% by weight |
| Al₂O₃ | 15.0% by weight | SO₃ | 1.0% by weight |
| CaO | 8.0% by weight | P₂O₅ | 0.2% by weight |
| Na₂O | 0.2% by weight | Cl | 0.3% by weight |
| K₂O | 0.2% by weight | Others | slight |
| Fe₂O₃ | 0.2% by weight | | |

The specific gravity is 1.2 as measured by the same method as in Example 3-1.

### (Example 3-3)

103 parts by weight of a fired paper-making sludge ("Cyclon ash" handled by Maruto Yozai-sha) is kneaded with 1210 parts by weight of the unfired paper-making sludge of Example 3-1.

Moreover, the composition of the fired sludge as converted to each oxide is as follows as a result of an analysis using a fluorescent X-ray analyzing apparatus (RIX2100, made by Rigaku).

| (Fired product of paper-making sludge) | | | |
|---|---|---|---|
| SiO₂ | 34.1% by weight | MgO | 6.0% by weight |
| Al₂O₃ | 20.7% by weight | P₂O₅ | 2.7% by weight |
| Fe₂O₃ | 12.4% by weight | TiO₂ | 1.0% by weight |
| CaO | 21.3% by weight | SO₃ | 0.5% by weight |
| | | Cl | 0.2% by weight |
| | | ZnO | 0.1% by weight |
| | | Others | slight |

| | |
|---|---|
| Average grain size | 11.0 µm |
| True specific gravity | 2.756 |
| Specific surface area | 19.0 m²/g |

Moreover, the specific gravity is 0.8 as measured by the same method as in Example 3-1.

Then, a pressure of 5 kgf/cm² is applied while transferring the kneaded mass through a conveyor to form a sheet-shaped body having a thickness of 10 mm. The sheet-shaped body is heated at 110°C to form a plate-shaped composite hardened body.

### (Example 3-4)

After a phenolic resin solution added with a curing agent is impregnated into a sheet-shaped body of glass fibers (impregnating amount of 45% as solid content), it is dried at a temperature of 80°C for 20 minutes to obtain a reinforcing sheet. Further, a phenolic resin is applied onto front and rear surfaces of a core material and dried at a temperature of 80°C for 20 minutes.

Then, a sheet-shaped body is formed in the same manner as in Example 3-2. Further, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and reinforcing layers laid on the front and rear surfaces thereof and having a thickness of 1 mm. Moreover, a single decorative plate of cryptomeria having a thickness of 0.2 mm is adhered to the front surface of the composite building material through an adhesive of vinyl acetate.

The specific gravity of the core material is 1.2 as measured by the same method as in Example 3-1.

### (Example 3-5)

2500 parts by weight of the unfired paper-making sludge of Example 3-1, 100 parts by weight of phenolic resin and 500 parts by weight of water are kneaded to obtain a kneaded mass. A pressure of 120 kgf/cm² is applied to the resulting kneaded mass by a dehydration press process to form a sheet-shaped body having a thickness of 10 mm. The sheet-shaped body is heated at 110°C to obtain a plate-shaped composite hardened body.

The specific gravity is 1.4 as measured by the same method as in Example 3-1.

A copper foil having a thickness of 18 µm is adhered onto each surface of the composite hardened body through an adhesive of vinyl acetate to form an electromagnetic wave shielding layer.

### (Example 3-6)

1700 parts by weight of the unfired paper-making sludge of Example 3-1, 200 parts by weight of phenolic resin, 600 parts by weight of a fired paper-making sludge ("Cyclon ash" handled by Maruto Yozai-sha) and 7500 parts by weight of water are kneaded to obtain a kneaded mass. A pressure of 65 kgf/cm² is applied to the kneaded mass by a dehydration press process to form a sheet-shaped body having a thickness of 10 mm. The sheet-shaped body is heated at 110°C to obtain a plate-shaped composite hardened body.

The specific gravity is 1.2 as measured by the same method as in Example 3-1.

A phenolic resin is applied onto both surfaces of the composite hardened body and waterproof papers are adhered to both surfaces, which are hardened by heating at 100°C for 1 hour.

### (Example 3-7)

This example is fundamentally the same as Example 3-1, except that water is added to the paper-making sludge to form a slurry having a solid content of 6% by weight and 8000 kg of this slurry is paper-made in a circle paper machine and shaped into a sheet-shaped body having a thickness of 10 mm while applying a pressure of 170 kgf/cm² (16.7 MPa). Then, the sheet-shaped body is dried by heating at 100°C to obtain a composite hardened body.

### (Example 3-8)

This example is fundamentally the same as Example 3-2, except that water is added to the paper-making sludge to form a slurry having a solid content of 10% by weight and 600 kg of this slurry is dehydrated under a pressure of 55 kgf/cm² (5.39 MPa) by a dehydration press process to obtain a sheet-shaped body having a thickness of 10 mm. Then, the sheet-shaped body is dried by heating at 100°C to obtain a composite hardened body.

### (Example 3-9)

This example is fundamentally the same as Example 3-3, except that 103 parts by weight of the fired paper-making sludge and 3500 parts by weight of the unfired paper-making sludge of Example 3-1 are kneaded.

### (Comparative Example 3-1)

This comparative example is the same as in Example 3-1 except that the paper-making sludge of Example 3-1 is mixed with an aqueous solution of 1N hydrochloric acid to decompose and remove calcium carbonate and shaped into a sheet-shaped body having a thickness of 10 mm while applying a pressure of 350 kgf/cm². The sheet-shaped body is heated at 100°C to obtain a plate-shaped composite hardened body having no crystal.

### (Comparative Example 3-2)

A slurry is prepared by mixing 60 parts by weight of a fired scum, 36 parts by weight of water, 100 parts by weight of a cement and 0.3 part by weight of vinylon fibers in a forced agitating mixer for 3 minutes.
The slurry is poured into a mold and pressurized under 150-180 kgf/cm² and taken out therefrom.

### (Comparative Example 3-3)

A fused slug of lime-based sewage sludge (produced by the Osaka Sewerage Public Corporation and having the following main chemical components) is pulverized in a ball mill. 5 parts by weight of the pulverized product having a specific surface area of 0.35 m²/g (blaine value: 3500 cm²/g) is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

With respect to the composite hardened bodies and composite building materials obtained by the above examples and comparative examples, tests are made to measure bending strength, compression strength, workability and nail striking property. The results are shown in Table 3. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a presence or an absence of crack.

**Table 3**

| | Specific gravity | Bending strength (kgf/cm²) | Compression strength (kgf/cm²) | Workability | Nail striking property |
|---|---|---|---|---|---|
| Example 3-1 | 1.5 | 238 | 851 | cuttable | absence of crack |
| Example 3-2 | 1.2 | 220 | 845 | cuttable | absence of crack |
| Example 3-3 | 0.7 | 182 | 817 | cuttable | absence of crack |
| Example 3-4 | 1.2 | 596 | 835 | cuttable | presence of crack |
| Example 3-5 | 1.4 | 470 | 850 | cuttable | presence of crack |
| Example 3-6 | 1.2 | 351 | 768 | cuttable | absence of crack |
| Example 3-7 | 1.5 | 393 | 826 | cuttable | absence of crack |
| Example 3-8 | 1.2 | 215 | 793 | cuttable | absence of crack |
| Example 3-9 | 0.9 | 117 | 683 | cuttable | absence of crack |
| Comparative Example 3-1 | 1.0 | 159 | 785 | cuttable | presence of crack |
| Comparative Example 3-2 | - | 95 | 730 | cuttable | presence of crack |
| Comparative Example 3-3 | - | 103 | 796 | no cut | presence of crack |

And also, the crystalline structures of the composite hardened bodies of Example 3-1 and Example 3-3 are confirmed by an X-ray diffractometry. The X-ray diffraction charts are the same as shown in Figs. 4 and 5, respectively. Moreover, the X-ray diffractometry is carried out by using MiniFlex made by Rigaku and Cu as a target. It is ascertained that the crystalline structure is included in the amorphous structure because a gentle undulation (harrow) is observed about 2θ = 15°-30° and a peak indicating the crystalline structure is also observed. And also, crystal of calcium carbonate (calsite), kaolinite and crystal body of SiO₂ are identified from the peaks. The content of calcium carbonate is 9.8% by weight to the composite hardened body as a conversion value.

### (Example 4-1)

There is provided 1512 g of an unfired paper-making sludge ("Green sludge" handled by Maruto Yozai-sha, solid content: 34% by weight, water content: 66% by weight). Then, a pressure of 350 kgf/cm² is applied while transferring the paper-making sludge through a conveyor to form a sheet-shaped body having a thickness of 10 mm. The sheet-shaped body is dried by heating at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 50.4% by weight | MgO | 1.4% by weight |
| SiO₂ | 25.2% by weight | SO₃ | 0.5% by weight |
| Al₂O₃ | 14.0% by weight | P₂O₅ | 0.2% by weight |
| CaO | 8.0% by weight | Cl | 0.2% by weight |
| TiO₂ | 1.0% by weight | ZnO | 0.1 % by weight |
| | | Others | slight |

Since the thus obtained composite hardened body is a rectangular plate, a volume id determined by measuring a length of each side, and further a specific gravity can be calculated by measuring a weight. The specific gravity is 1.5.

Moreover, when a side face of the composite hardened body is observed by means of an optical microscope (50 magnification), the fibers are oriented in a direction perpendicular to the pressure applying direction.

### (Example 4-2)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge through a conveyor to form a sheet-shaped body having a thickness of 10 mm. The sheet-shaped body is dried by heating at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 46.0% by weight | TiO₂ | 1.0% by weight |
| Al₂O₃ | 14.0% by weight | SO₃ | 1.0% by weight |
| Al₂O₃ | 14.0% by weight | SO₃ | 1.0% by weight |
| CaO | 8.0% by weight | P₂O₅ | 0.2% by weight |
| Na₂O | 0.2% by weight | Cl | 0.3% by weight |
| K₂O | 0.2% by weight | Others | slight |
| Fe₂O₃: | 0.2% by weight | | |

The specific gravity is 1.2 as measured by the same manner as in Example 4-1.

### (Example 4-3)

103 parts by weight of a fired paper-making sludge. ("Cyclon ash" handled by Maruto Yozai-sha) is kneaded with 1209 parts by weight of the unfired paper-making sludge of Example 1.

Moreover, the composition of the fired sludge as converted to each oxide is as follows as a result of an analysis using a fluorescent X-ray analyzing apparatus (RIX2100, made by Rigaku).

| (Fired product of paper-making sludge) | | | |
|---|---|---|---|
| SiO₂ | 34.1 % by weight | MgO | 6.0% by weight |
| Al₂O₃ | 20.7% by weight | P₂O₅ | 2.7% by weight |
| Fe₂O₃ | 12.4% by weight | TiO₂ | 1.0% by weight |
| CaO | 21.3% by weight | SO₃ | 0.5% by weight |
| | | Cl | 0.2% by weight |
| | | ZnO | 0.1% by weight |
| | | Others | slight |

| | |
|---|---|
| Average grain size | 11.0 µm |
| True specific gravity | 2.756 |
| Specific surface area | 19.0 m²/g |

The specific gravity is 0.8 as measured by the same manner as in Example 4-1.

Then, a pressure of 3 kgf/cm² is applied while transferring the kneaded mass through a conveyor to form a sheet-shaped body having a thickness of 10 mm. The sheet-shaped body is heated at 110°C to form a plate-shaped composite hardened body.

### (Example 4-4)

The same procedure as in Example 4-1 is repeated except that the pressure is 400 kgf/cm² and the specific gravity is adjusted to 1.9.

### (Example 4-5)

The same procedure as in Example 4-2 is repeated except that 0.1 g of a surfactant (sodium alkylbenzene sulphonate) is added and stirred. In the case, the specific gravity is adjusted to 0.4 through bubbles produced by the stirring.

### (Example 4-6)

After a phenolic resin solution added with a curing agent is. impregnated into a sheet-shaped body of glass fibers (impregnating amount of 45% as solid content), it is dried at a temperature of 80°C for 20 minutes to obtain a reinforcing sheet. Further, a phenolic resin is applied onto front and rear surfaces of a core material and dried at a temperature of 80°C for 20 minutes.

Then, a sheet-shaped body is formed in the same manner as in Example 4-2. Further, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and reinforcing layers laid on the front and rear surfaces thereof and having a thickness of 1 mm. Moreover, a single decorative plate of cryptomeria having a thickness of 0.2 mm is adhered to the front surface of the composite building material through an adhesive of vinyl acetate.

The specific gravity of the core material is 1.4 as measured in the same manner as in Example 4-1.

### (Example 4-7)

1512 parts by weight of the unfired paper-making sludge of Example 4-1 and 378 parts by weight of phenolic resin are kneaded to obtain a kneaded mass. While the resulting kneaded mass is transferred through a conveyor, a pressure of 3 kgf/cm² is applied to form a sheet-shaped body having a thickness of 10 mm. The sheet-shaped body is heated at 110°C to obtain a plate-shaped composite hardened body.

The specific gravity is 1.4 as measured in the same manner as in Example 4-1.

A copper foil having a thickness of 18 µm is adhered to each surface of the composite hardened body through an adhesive of vinyl acetate to from an electromagnetic wave shielding layer.

### (Example 4-8)

1200 parts by weight of the unfired paper-making sludge of Example 4-1, 600 parts by weight of phenolic resin and 600 parts by weight of a fired paper-making sludge ("Cyclon ash" handled by Maruto Yozai-sha) are kneaded to obtain a kneaded mass. While the resulting kneaded mass is transferred through a conveyor, a pressure of 3 kgf/cm² is applied to form a sheet-shaped body having a thickness of 10 mm. The sheet-shaped body is heated at 110°C to obtain a plate-shaped composite hardened body.

The specific gravity is 1.2 as measured in the same manner as in Example 4-1.

A phenolic resin is applied onto each surface of the composite hardened body and a waterproof paper is adhered to each surface and hardened by heating at 100°C for 1 hour.

### (Example 4-9)

This example is fundamentally the same as in Example 4-1 except that water is added to the paper-making sludge (solid content: 34% by weight, water content: 66% by weight) to form a slurry having a solid content of 15% by weight and 300 kg of the slurry is shaped into a sheet-shaped body having a thickness of 10 mm while applying a pressure of 95 kgf/cm² through a dehydrating press method. Then, the sheet-shaped body is heated at 100°C to obtain a plate-shaped composite hardened body.

### (Example 4-10)

This example is fundamentally the same as in Example 4-2 except that water is added to the paper-making sludge (solid content: 34% by weight, water content: 66% by weight) to form a slurry having a solid content of 20% by weight and a pressure of 65 kgf/cm² (6.37 MPa) is applied while transferring 250 kg of the slurry through a conveyor and dried by heating at 100°C to obtain a plate-shaped composite hardened body having a thickness of 10 mm.

### (Example 4-11)

The same procedure as in Example 4-1 is repeated except that the pressure is 500 kgf/cm² and the specific gravity is adjusted to 2.2.

### (Example 4-12)

The same procedure as in Example 4-2 is repeated except that 0.1 g of a surfactant (sodium alkylbenzene sulphonate) is added and stirred. In the case, the specific gravity is adjusted to 0.4 through bubbles produced by the stirring.

### (Comparative Example 4-1)

A slurry is prepared by mixing 60 parts by weight of a fired scum, 36 parts by weight of water, 100 parts by weight of a cement and 0.3 part by weight of vinylon fibers in a forced agitating mixer for 3 minutes.
The slurry is poured into a mold and pressurized under 150-180 kgf/cm² and taken out therefrom.

### (Comparative Example 4-2)

A fused slug of lime-based sewage sludge (produced by the Osaka Sewerage Public Corporation and having the following main chemical components) is pulverized in a ball mill. 5 parts by weight of the pulverized product having a specific surface area of 0.35 m²/g (blaine value: 3500 cm²/g) is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

With respect to the composite hardened bodies and composite building materials obtained in the above examples and comparative examples, tests are made to measure bending strength, compression strength, workability and nail striking property. The results are shown in Table 4. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a presence or absence of crack.

**Table 4**

| | Bending strength (kgf/cm²) | Compression strength (kgf/cm²) | Workability | Nail striking property |
|---|---|---|---|---|
| Example 4-1 | 238 | 851 | cuttable | absence of crack |
| Example 4-2 | 220 | 845 | cuttable | absence of crack |
| Example 4-3 | 182 | 817 | cuttable | absence of crack |
| Example 4-4 | 240 | 860 | cuttable | presence of crack |
| Example 4-5 | 180 | 750 | cuttable | presence of crack |
| Example 4-6 | 278 | 880 | cuttable | absence of crack |
| Example 4-7 | 248 | 850 | cuttable | absence of crack |
| Example 4-8 | 182 | 817 | cuttable | absence of crack |
| Example 4-9 | 253 | 830 | cuttable | absence of crack |
| Example 4-10 | 225 | 821 | cuttable | absence of crack |
| Example 4-11 | 395 | 820 | cuttable | presence of crack |
| Example 4-12 | 43 | 281 | cuttable | presence of crack |
| Comparative Example 4-1 | 103 | 796 | no cut | presence of crack |
| Comparative Example 4-2 | 97 | 753 | no cut | presence of crack |

And also, the crystalline structures of the composite hardened bodies of Example 4-1 and Example 4-3 are confirmed by an X-ray diffractometry. The X-ray diffraction charts are the same as shown in Figs. 4 and 5, respectively. Moreover, the X-ray diffractometry is carried out by using MiniFlex made by Rigaku and Cu as a target. It is ascertained that the crystalline structure is included in the amorphous structure because a gentle undulation (harrow) is observed about 2θ = 15°-30° and a peak indicating the crystalline structure is also observed. And also, crystal of calcium carbonate (calsite), kaolinite and crystal body of SiO₂ are identified from the peaks. The content of calcium carbonate is 9.8% by weight to the composite hardened body as a conversion value.

### (Example 5-1)

There is provided 1512 g of an unfired paper-making sludge ("Green sludge" handled by Maruto Yozai-sha, solid content: 34% by weight, water content: 66% by weight). Then, a pressure of 350 kgf/cm² is applied while transferring the paper-making sludge through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 50.4% by weight | MgO | 1.4% by weight |
| SiO₂ | 25.2% by weight | SO₃ | 0.5% by weight |
| Al₂O₃ | 14.0% by weight | P₂O₅ | 0.2% by weight |
| CaO | 8.0% by weight | Cl | 0.2% by weight |
| TiO₂ | 1.0% by weight | ZnO | 0.1% by weight |
| | | Others | slight |

Moreover, since the thus obtained composite hardened body is a rectangular plate, a volume is determined by measuring a length of each side, and further a specific gravity can be calculated by measuring a weight. The specific gravity is 1.4. And also, the true specific gravity is 1.8 and the porosity is 22%.

### (Example 5-2)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 46.0% by weight | TiO₂ | 1.0% by weight |
| Al₂O₃ | 14.0% by weight | SO₃ | 1.0% by weight |
| Al₂O₃ | 14.0% by weight | SO₃ | 1.0% by weight |
| CaO | 8.0% by weight | P₂O₅ | 0.2% by weight |
| Na₂O | 0.2% by weight | Cl | 0.3% by weight |
| K₂O | 0.2% by weight | Others | slight |
| Fe₂O₃ | 0.2% by weight | | |

The specific gravity is 1.2 as measured in the same manner as in Example 5-1. And also, the true specific gravity is 1.68 and the porosity is 28.1%.

### (Example 5-3)

103 parts by weight of a fired paper-making sludge ("Cyclon ash" handled by Maruto Yozai-sha) is kneaded with 1209 parts by weight of the unfired paper-making sludge of Example 1.

Moreover, the composition of the fired sludge as converted to each oxide is as follows as a result of an analysis using a fluorescent X-ray analyzing apparatus (RIX2100, made by Rigaku).

| (Fired product of paper-making sludge) | | | |
|---|---|---|---|
| SiO₂ | 33.1% by weight | MgO | 6.0% by weight |
| Al₂O₃ | 21.7% by weight | P₂O₅ | 2.7% by weight |
| Fe₂O₃ | 12.4% by weight | TiO₂ | 1.0% by weight |
| CaO | 21.3% by weight | SO₃ | 0.5% by weight |
| | | Cl | 0.2% by weight |
| | | ZnO | 0.1% by weight |
| | | Others | slight |

The above fired sludge has an average grain size of 11.0 µm, a true specific gravity of 2.756 and a specific surface area of 19.0 m²/g.

The specific gravity is 0.8 as measured in the same manner as in Example 5-1. The true specific gravity is 1.2 and the porosity is 33%.

Then, a pressure of 3 kgf/cm² is applied while transferring the kneaded mass through a conveyor to form a sheet-shaped body having a thickness of 10 mm. The sheet-shaped body is heated at 110°C to form a plate-shaped composite hardened body.

### (Example 5-4)

The same procedure as in Example 5-1 is repeated except that the pressure is 380 kgf/cm² and the specific gravity is adjusted to 1.7. The true specific gravity is 1.8 and the porosity is 5.6%.

### (Example 5-5)

The same procedure as in Example 5-2 is repeated except that 0.1 g of a surfactant (sodium alkylbenzene sulphonate) is added and stirred. In the case, the specific gravity is adjusted to 0.8 through bubbles produced by the stirring. The true specific gravity is 1.68 and the porosity is 52.4%.

### (Example 5-6)

After a phenolic resin solution added with a curing agent is impregnated into a sheet-shaped body of glass fibers (impregnating amount of 45% as solid content), it is dried at a temperature of 80°C for 20 minutes to obtain a reinforcing sheet. Further, a phenolic resin is applied onto front and rear surfaces of a core material and dried at a temperature of 80°C for 20 minutes.

Then, a sheet-shaped body is formed in the same manner as in Example 5-2. Further, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and reinforcing layers laid on the front and rear surfaces thereof and having a thickness of 1 mm. Moreover, a single decorative plate of cryptomeria having a thickness of 0.2 mm is adhered to the front surface of the composite building material through an adhesive of vinyl acetate.

The specific gravity of the core material is 1.2 as measured in the same manner as in Example 5-1. The true specific gravity is 1.68 and the porosity is 28.5%.

### (Example 5-7)

1512 parts by weight of the unfired paper-making sludge of Example 5-1 and 378 parts by weight of phenolic resin are kneaded to obtain a kneaded mass. While the resulting kneaded mass is transferred through a conveyor, a pressure of 3 kgf/cm² is applied to form a sheet-shaped body having a thickness of 10 mm. The sheet-shaped body is heated at 110°C to obtain a plate-shaped composite hardened body.

The specific gravity is 1.4 as measured in the same manner as in Example 5-1. The true specific gravity is 1.8 and the porosity is 22.2%.

A copper foil having a thickness of 18 µm is adhered to each surface of the composite hardened body through an adhesive of vinyl acetate to form an electromagnetic wave shielding layer.

### (Example 5-8)

1200 parts by weight of the unfired paper-making sludge of Example 5-1, 600 parts by weight of phenolic resin and 600 parts by weight of a fired paper-making sludge ("Cyclon ash" handled by Maruto Yozai-sha) are kneaded to obtain a kneaded mass. While the resulting kneaded mass is transferred through a conveyor, a pressure of 3 kgf/cm² is applied to form a sheet-shaped body having a thickness of 10 mm. The sheet-shaped body is heated at 110°C to obtain a plate-shaped composite hardened body.

The specific gravity is 1.2 as measured in the same manner as in Example 5-1. The true specific gravity is 1.8 and the porosity is 22.2%.

A phenolic resin is applied onto both surfaces of the composite hardened body and a waterproof paper is adhered to each surface and hardened by heating at 100°C for 1 hour.

### (Example 5-9)

This example is fundamentally the same as Example 5-1, except that the pressure is 500 kgf/cm² and the specific gravity is adjusted to 1.75. The true specific gravity is 1.8 and the porosity is 2.8%.

### (Comparative Example 5-1)

This example is the same as in Example 5-2, except that 0.1 g of a surfactant (sodium alkylbenzene sulphonate) is added and stirred.
The specific gravity is adjusted to 0.4 by bubbles produced through the stirring. The true specific gravity is 1.68 and the porosity is 76.1%.

### (Comparative Example 5-2)

A slurry is prepared by mixing 60 parts by weight of a fired scum, 36 parts by weight of water, 100 parts by weight of a cement and 0.3 part by weight of vinylon fibers in a forced agitating mixer for 3 minutes. The slurry is poured into a mold and pressurized under 150-180 kgf/cm² and taken out therefrom.

### (Comparative Example 5-3)

A fused slug of lime-based sewage sludge (produced by the Osaka Sewerage Public Corporation and having the following main chemical components) is pulverized in a ball mill. 5 parts by weight of the pulverized product having a specific surface area of 0.35 m²/g (blaine value: 3500 cm²/g) is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

With respect to the composite hardened bodies and composite building materials obtained in the above examples and comparative examples, tests are made to measure bending strength, compression strength, workability and nail striking property. The results are shown in Table 5. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a presence or absence of crack.

**Table 5**

| Example/ Comparative Example porosity % | | Bending strength (kgf/cm²) | Compression strength (kgf/cm²) | Workability | Nail striking property |
|---|---|---|---|---|---|
| Example 5-1 | 22 | 239 | 851 | cuttable | absence of crack |
| Example 5-2 | 28.1 | 221 | 845 | cuttable | absence of crack |
| Example 5-3 | 33 | 180 | 817 | cuttable | absence of crack |
| Example 5-4 | 5.6 | 241 | 860 | cuttable | presence of crack |
| Example 5-5 | 52 | 181 | 750 | cuttable | presence of crack |
| Example 5-7 | 22.2 | 277 | 880 | cuttable | absence of crack |
| Example 5-8 | 22.2 | 247 | 850 | cuttable | absence of crack |
| Example 5-9 | 2.8 | 95 | 730 | cuttable | presence of crack |
| Comparative Example 5-1 | 76.1 | 95 | 730 | cuttable | presence of crack |
| Comparative Example 5-2 | - | 103 | 796 | no cut | presence of crack |
| Comparative Example 5-3 | - | 97 | 753 | no cut | presence of crack |

And also, the crystalline structures of the composite hardened bodies of Example 5-1 and Example 5-3 are confirmed by an X-ray diffractometry. The X-ray diffraction charts are the same as shown in Figs. 4 and 5, respectively. Moreover, the X-ray diffractometry is carried out by using MiniFlex made by Rigaku and Cu as a target. It is ascertained that the crystalline structure is included in the amorphous structure because a gentle undulation (harrow) is observed about 2θ = 15°-40° and a peak indicating the crystalline structure is also observed. And also, crystal of calcium carbonate (calsite), kaolinite and crystal body of SiO₂ are identified from the peaks. The content of calcium carbonate is 9.8% by weight to the composite hardened body as a conversion value.

### (Example 6-1)

There is provided 1512 g of an unfired paper-making sludge ("Green sludge" handled by Maruto Yozai-sha, solid content: 34% by weight, water content: 66% by weight). Then, while transferring the paper-making sludge through a conveyor and at the same time, a pressure of 10-300 kgf/cm² is applied to conduct pressurization and dehydration and drying is conducted by heating at 100°C to form a plate-shaped composite hardened body having a thickness of 10 mm.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 51.4% by weight | SO₃ | 0.5% by weight |
| SiO₂ | 24.2% by weight | P₂O₅ | 0.2% by weight |
| Al₂O₃ | 14.0% by weight | Cl | 0.2% by weight |
| CaO | 8.0% by weight | ZnO | 0.1% by weight |
| MgO | 1.4% by weight | Others | slight |
| TiO₂ | 1.0% by weight | | |

### (Example 6-2)

There is provided 1512 g of an unfired paper-making sludge ("Green sludge" handled by Maruto Yozai-sha, solid content: 34% by weight, water content: 66% by weight). Then, while transferring the paper-making sludge through a conveyor, pressurization and dehydration are carried out at a pressure of 10-300 kgf/cm² to form a sheet-shaped body having a thickness of 10 min. The sheet-shaped body is dried by heating at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 46.0% by weight | Cl | 0.3% by weight |
| SiO₂ | 24.2% by weight | Na₂O | 0.2% by weight |
| Al₂O₃ | 14.0% by weight | K₂O | 0.2% by weight |
| CaO | 8.0% by weight | Fe₂O₃ | 0.2% by weight |
| MgO | 4.6% by weight | P₂O₅ | 0.2% by weight |
| TiO₂ | 1.0% by weight | Others | slight |
| SO₃ | 1.0% by weight | | |

### (Example 6-3)

103 parts by weight of a fired paper-making sludge ("Cyclon ash" handled by Maruto Yozai-sha) is kneaded with 1209 parts by weight of the unfired paper-making sludge of Example 6-1.

Moreover, the composition of the fired sludge of the above paper-making sludge (fired sludge) as converted to each oxide is as follows as a result of an analysis using a fluorescent X-ray analyzing apparatus (RIX2100, made by Rigaku).

| (Fired product of paper-making sludge) | | | |
|---|---|---|---|
| SiO₂ | 34.1% by weight | TiO₂ | 1.0% by weight |
| Al₂O₃ | 20.7% by weight | SO₃ | 0.5% by weight |
| CaO | 21.3% by weight | Cl | 0.2% by weight |
| Fe₂O₃ | 12.4% by weight | ZnO | 0.1% by weight |
| MgO | 6.0% by weight | Others | slight |
| P₂O₅ | 2.7% by weight | | |

Moreover, the above fired sludge has an average grain size of 11.0 µm, a true specific gravity of 2.756, and a specific surface area of 19.0 m²/g.

Then, while transferring the kneaded mass through a conveyor, pressurization and dehydration are carried out at a pressure of 10-300 kgf/cm² to form a sheet-shaped body having a thickness of 10 mm. The sheet-shaped body is dried by heating at 110°C to form a plate-shaped composite hardened body.

### (Example 6-4)

After a phenolic resin solution added with a curing agent is impregnated into a sheet-shaped body of glass fibers (impregnating amount of 45% as solid content), it is dried at a temperature of 80°C for 20 minutes to obtain a reinforcing sheet.

Then, a sheet-shaped body is formed in the same manner as in Example 6-2 and phenolic resin is applied onto front and rear surfaces of the shaped body and dried at a temperature of 80°C for 20 minutes. Further, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and reinforcing layers laid on the front and rear surfaces thereof and having a thickness of 1 mm. Moreover, a single decorative plate of cryptomeria having a thickness of 0.2 mm is adhered to the front surface of the composite building material through an adhesive of vinyl acetate.

### (Example 6-5)

1512 parts by weight of the unfired paper-making sludge of Example 6-1 and 378 parts by weight of phenolic resin are kneaded to obtain a kneaded mass. While the resulting kneaded mass is transferred through a conveyor, pressurization and dehydration are carried out at a pressure of 10-300 kgf/cm² to form a sheet-shaped body having a thickness of 10 mm. The sheet-shaped body is dried by heating at 110°C to obtain a plate-shaped composite hardened body.

### (Example 6-6)

1200 parts by weight of the unfired paper-making sludge of Example 6-1, 600 parts by weight of phenolic resin and 600 parts by weight of a fired paper-making sludge ("Cyclon ash" handled by Maruto Yozai-sha) are kneaded to obtain a kneaded mass. While the resulting kneaded mass is transferred through a conveyor, a pressure of 10-300 kgf/cm² is applied to form a sheet-shaped body having a thickness of 10 mm. The sheet-shaped body is heated at 80°C to obtain a plate-shaped composite hardened body.

### (Example 6-7)

This example is fundamentally the same as Example 6-1, except that water is added to the unfired paper-making sludge of Example 1 to form a slurry having a solid content of 10% by weight and 400 kg of this slurry is pressurized at a pressure of 10-300 kgf/cm² (0.98-29.4 MPa) through a dehydration pressing method and dehydrated by suction and further dried by heating at 100°C to obtain a plate-shaped composite hardened body having a thickness of 10 mm.

### (Example 6-8)

This example is fundamentally the same as Example 6-2, except that water is added to the paper-making sludge to form a slurry having a solid content of 5% by weight and 430 kg of this slurry is pressurized at a pressure of 10-300 kgf/cm² (0.98-29.4 MPa) through a dehydration pressing method and dehydrated by suction and further dried by heating at 100°C to obtain a plate-shaped composite hardened body having a thickness of 10 mm.

### (Example 6-9)

This example is fundamentally the same as Example 6-3, except that 103 parts by weight of the fired paper-making sludge, 1750 parts by weight of the unfired paper-making sludge of Example 1 and 6300 parts by weight of water are kneaded.

Then, the kneaded mass is paper-made by a cylinder type paper making method and subjected to pressurization and dehydration at a pressure of 50 kgf/cm² (4.9 MPa) to obtain a sheet-shaped body having a thickness of 10 mm. The sheet-shaped body is dried by heating at 110°C to obtain a plate-shaped composite hardened body.

### (Example 6-10)

This example is fundamentally the same as Example 6-5, except that 1800 parts by weight of the unfired paper-making sludge of Example 6-1, 350 parts by weight of phenolic resin and 600 parts by weight of fired paper-making sludge are kneaded to obtain a kneaded mass.

While transferring the kneaded mass through a conveyor, pressurization and dehydration are carried out at a pressure of 10-300 kgf/cm² (0.98-29.4 MPa) to obtain a sheet-shaped body having a thickness of 10 mm. Then, the sheet-shaped body is dried by heating at 150°C to obtain a plate-shaped composite hardened body.

### (Example 6-11)

This example is fundamentally the same as Example 6-6, except that 2400 parts by weight of the unfired paper-making sludge of Example 6-1, 600 parts by weight of phenolic resin, 600 parts by weight of a fired paper-making sludge and 350 parts by weight of water are kneaded to obtain a kneaded mass.

Then, while transferring the kneaded mass through a conveyor, pressurization and dehydration are carried out at a pressure of 10-300 kgf/cm² (0.98-29.4 MPa) to obtain a sheet-shaped body having a thickness of 10 mm. Then, the sheet-shaped body is dried by heating at 150°C to obtain a composite hardened body.

### (Comparative Example 6-1)

A slurry is prepared by mixing 60 parts by weight of a fired scum, 36 parts by weight of water, 100 parts by weight of a cement and 0.3 part by weight of vinylon fibers in a forced agitating mixer for 3 minutes.
The slurry is poured into a mold and pressurized under 150-180 kgf/cm² and taken out therefrom.

### (Comparative Example 6-2)

A fused slug of lime-based sewage sludge (produced by the Osaka Sewerage Public Corporation and having the following main chemical components) is pulverized in a ball mill. 5 parts by weight of the pulverized product having a specific surface area of 0.35 m²/g (blaine value: 3500 cm²/g) is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| CaO | 33.9% by weight | Fe₂O₃ | 5.0% by weight |
| SiO₂ | 33.4% by weight | MgO | 2.4% by weight |
| Al₂O₃ | 14.2% by weight | NaO | 0.7% by weight |
| P₂O₅ | 7.0% by weight | K₂O | 0.7% by weight |

### (Comparative Example 6-3)

This example is the same as in Example 6-3 except that the drying is carried out by heating at 100°C without conducting pressurization.

As a result of an X-ray diffraction, the obtained composite hardened body is confirmed to be a complicated crystal body consisting of Gehlenite,syn, Melitite-synthetic, Gehlenite-synthetic, Anorthite. ordered and calcium carbonate (calcite).

As shown in the following Table 1, the bending strength is 48 kgf/cm² and the compression strength is 580 kgf/cm².

With respect to the composite hardened bodies and composite building materials obtained in these examples and comparative examples, tests are made to measure bending strength, compression strength, workability and nail striking property. The results are shown in Table 6. Moreover, the bending strength is measured according to a method defined in JIS A6901, and the compression strength is measured according to a method defined in JIS A5416, respectively. And also, the workability is judged by subjecting to a cutting work with a circular saw for woodworking. Furthermore, the nail striking property is evaluated by striking a nail of 4 mm in diameter and 50 mm in length to measure a nail embedded depth and presence or absence of crack.

**Table 6**

| | Bending strength (kgf/cm²) | Compression strength (kgf/cm²) | Workability | Nail striking property |
|---|---|---|---|---|
| Example 6-1 | 273 | 837 | cuttable | go through absence of crack |
| Example 6-2 | 298 | 853 | cuttable | go through absence of crack |
| Example 6-3 | 216 | 811 | cuttable | go through absence of crack |
| Example 6-4 | 572 | 853 | cuttable | go through absence of crack |
| Example 6-5 | 366 | 835 | cuttable | go through absence of crack |
| Example 6-6 | 174 | 850 | cuttable | go through absence of crack |
| Example 6-7 | 304 | 836 | cuttable | go through absence of crack |
| Example 6-8 | 273 | 820 | cuttable | go through absence of crack |
| Example 6-9 | 195 | 738 | cuttable | go through absence of crack |
| Example 6-10 | 380 | 838 | cuttable | go through absence of crack |
| Example 6-11 | 336 | 821 | cuttable | go through absence of crack |
| Comparative Example 6-1 | 105 | 780 | no cut | go through presence of crack |
| Comparative Example 6-2 | 83 | 735 | no cut | go through presence of crack |
| Comparative Example 6-3 | 48 | 580 | cuttable | go through presence of crack |

And also, the crystalline structures of the composite hardened bodies of Example 6-1 and Example 6-3 are confirmed by an X-ray diffractometry. The X-ray diffraction charts are the same as shown in Figs. 4 and 5, respectively.

Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, Gehlenite.syn, Melitite-synthetic, Gehlenite-synthetic and Anorthite.ordered are identified from the peaks of the chart corresponding to Fig. 5.

### (Example 7-1)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge, which is added with 4.1 parts by weight of a paraffinic water-absorption preventing agent (solid content: 50 parts by weight, water content: 50% by weight) and sufficiently mixed and uniformly dispersed therein, through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 51.4% by weight | MgO | 1.4% by weight |
| SiO₂ | 22.8% by weight | SO₃ | 0.5% by weight |
| Al₂O₃ | 14.0% by weight | P₂O₅ | 0.2% by weight |
| CaO | 8.0% by weight | Cl | 0.2% by weight |
| TiO₂ | 1.0% by weight | ZnO | 0.1% by weight |
| Paraffin | 0.3% by weight | Others | slight |

Moreover, when a side face of the composite hardened body is observed by means of an optical microscope (50 magnification), the fibers are oriented in a direction perpendicular to the pressure applying direction.

### (Example 7-2)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge, which is added with 206 parts by weight of an aliphatic acid water-absorption preventing agent (solid content: 25% by weight, water content: 75% by weight) and sufficiently mixed and uniformly dispersed therein, through a conveyor to form a sheet-shaped body having a thickness of 10 mm. The sheet-shaped body is heated at 100°C to form a plate-shaped composite hardened body.

The thus obtained composite hardened body is confirmed to have the following composition as converted to oxides as a result of an analysis using a fluorescent X-ray analyzing apparatus (RIX2100, made by Rigaku). Moreover, pulp is measured from an amount of weight reduction after being fired at 1100°C.

| Account | | | |
|---|---|---|---|
| Pulp | 55.0% by weight | TiO₂ | 1.0% by weight |
| SiO2 | 8.9% by weight | SO₃ | 1.0% by weight |
| Al₂O₃ | 14.0% by weight | SO₃ | 1.0% by weight |
| CaO | 8.0% by weight | P₂O₅ | 0.2% by weight |
| Na₂O | 0.2% by weight | Cl | 0.3% by weight |
| K₂O | 0.2% by weight | Aliphatic acid | 9.9% by weight |
| Fe₂O₃ | 0.2% by weight | Others | slight |

### (Example 7-3)

103 parts by weight of a fired paper-making sludge ("Cyclon ash" handled by Maruto Yozai-sha) is kneaded with 1209 parts by weight of the unfired paper-making sludge of Example 1. In this case, 52 parts by weight of stearic acid water-absorption preventing agent is added.

Moreover, the composition of the fired sludge as converted to each oxide is as follows as a result of an analysis using a fluorescent X-ray analyzing apparatus (RIX2100, made by Rigaku). And also, it has an average grain size of 11.0 µm, a true specific gravity of 2.756 and a specific surface area of 19.0 m²/g.

| (Fired product of paper-making sludge) | | | |
|---|---|---|---|
| SiO₂ | 30.1% by weight | TiO₂ | 1.0% by weight |
| Al₂O₃ | 20.7% by weight | SO₃ | 0.5% by weight |
| Fe₂O₃ | 12.4% by weight | Cl | 0.2% by weight |
| CaO | 21.3% by weight | ZnO | 0.1% by weight |
| MgO | 6.0% by weight | Stearic acid | 3.8% by weight |
| P₂O₅ | 2.7% by weight | Others | slight |

Then, a pressure of 5 kgf/cm² is applied while transferring the kneaded mass through a conveyor to form a sheet-shaped body having a thickness of 10 mm. The sheet-shaped body is heated at 110°C to form a plate-shaped composite hardened body.

### (Example 7-4)

After a phenolic resin solution added with a curing agent is impregnated into a sheet-shaped body of glass fibers (impregnating amount of 45% as solid content), it is dried at a temperature of 80°C for 20 minutes to obtain a reinforcing sheet. Further, a phenolic resin is applied onto front and rear surfaces of a core material and dried at a temperature of 80°C for 20 minutes.

Then, a sheet-shaped body is formed in the same manner as in Example 7-2. Further, the reinforcing sheet is placed on each of front and rear surfaces of the sheet-shaped body and pressed at a temperature of 110°C under a pressure of 7 kgf/cm² for 20 minutes to produce a composite building material consisting of the core material having a thickness of 10 mm and reinforcing layers laid on the front and rear surfaces thereof and having a thickness of 1 mm. Moreover, a single decorative plate of cryptomeria having a thickness of 0.2 mm is adhered to the front surface of the composite building material through an adhesive of vinyl acetate.

### (Example 7-5)

1512 parts by weight of the unfired paper-making sludge of Example 7-1 and 378 parts by weight of phenolic resin are kneaded to obtain a kneaded mass. In this case, 103 parts by weight of a paraffinic water-absorption preventing agent (solid content: 50% by weight, water content: 50% by weight) is added. A pressure of 3 kgf/cm² is applied while transferring the kneaded mass through a conveyor to form a sheet-shaped body having a thickness of 10 mm. The sheet-shaped body is heated at 110°C to obtain a plate-shaped composite hardened body.

### (Example 7-6)

1200 parts by weight of the unfired paper-making sludge of Example 7-1, 600 parts by weight of phenolic resin and 600 parts by weight of a fired paper-making sludge ("Cyclon ash" handled by Maruto Yozai-sha) are kneaded to obtain a kneaded mass. In this case, 201 parts by weight of a paraffinic water-absorption preventing agent (solid content: 50% by weight, water content: 50% by weight) is added. A pressure of 3 kgf/cm² is applied while transferring the kneaded mass through a conveyor to form a sheet-shaped body having a thickness of 10 mm. The sheet-shaped body is heated at 110°C to obtain a plate-shaped composite hardened body.

### (Example 7-7)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge through a conveyor to form a sheet-shaped body having a thickness of 10 mm. The sheet-shaped body is heated at 100°C to obtain a composite hardened body. Next, phenolic resin (HP-3000A, made by Asahi Yukizai Kogyo Co., Ltd.) is applied onto front and rear surfaces of three composite hardened bodies at 50, 100 and 150 g/m², respectively and dried at a temperature of 80°C for 20 minutes to obtain a composite hardened body.

### (Example 7-8)

There is provided 1000 parts by weight of an unfired paper-making sludge ("Green sludge" handled by Maruto Yozai-sha, solid content: 34% by weight, water content: 66% by weight). Then, 20, 60 and 100 parts by weight of a paraffinic water-absorption preventing agent (Peltol PA-406, made by Kindai Kagaku Kogyo Co., Ltd.) are added to the paper-making sludges, respectively, and sufficiently mixed to unniformly disperse the water-absorption preventing agent thereinto, and then transferred through a conveyor while applying a pressure of 3 kgf/cm² to form sheet-shaped bodies having a thickness of 10 mm. Next, each of these sheet-shaped body is heated to 100°C to form a plate-shaped composite hardened body.

### (Example 7-9)

There is provided 1000 parts by weight of an unfired paper-making sludge ("Green sludge" handled by Maruto Yozai-sha, solid content: 34% by weight, water content: 66% by weight). Then, an aliphatic derivative wax water-absorption preventing agent (Peltol CS-104, made by Kindai Kagaku Kogyo Co., Ltd.) is added to the paper-making sludge at 20, 60 and 100 parts by weight, respectively and sufficiently mixed to uniformly disperse the water-absorption preventing agent thereinto and transferred through a conveyor while applying a pressure of 3 kgf/cm² to form a sheet-shaped body having a thickness of 10 mm. Next, each of these sheet-shaped bodies is heated at 100°C to form a plate-shaped composite hardened body.

### (Comparative Example 7-1)

A slurry is prepared by mixing 60 parts by weight of a fired scum, 36 parts by weight of water, 100 parts by weight of a cement and 0.3 part by weight of vinylon fibers in a forced agitating mixer for 3 minutes. The slurry is poured into a mold and pressurized under 150-180 kgf/cm² and taken out therefrom.

### (Comparative Example 7-2)

A fused slug of lime-based sewage sludge (produced by the Osaka Sewerage Public Corporation and having the following main chemical components) is pulverized in a ball mill. 5 parts by weight of the pulverized product having a specific surface area of 0.35 m²/g (blaine value: 3500 cm²/g) is mixed with 95 parts by weight of normal Portland cement (made by Chichibu Onoda Cement Co., Ltd.) and SO₃ amount in the cement is adjusted to 2% by weight by adding natural gypsum to obtain a mixed cement composition. This cement is mixed with sand at a ratio of 1:3 and left to stand for 3 days.

| Account | | | |
|---|---|---|---|
| SiO₂ | 33.4% by weight | MgO | 2.4% by weight |
| Al₂O₃ | 14.2% by weight | P₂O₅ | 7.0% by weight |
| Fe₂O₃ | 5.0% by weight | NaO | 0.7% by weight |
| CaO | 33.9% by weight | K₂O | 0.7% by weight |

### (Comparative Example 7-3)

There is provided 1512 g of an unfired paper-making sludge ("Green sludge" handled by Maruto Yozai-sha, solid content: 34% by weight, water content: 66% by weight). Then, a pressure of 3 kgf/cm² is applied while transferring the paper-making sludge through a conveyor to form a sheet-shaped body having a thickness of 10 mm. The sheet-shaped body is heated at 100°C to obtain a composite hardened body.

With respect to the composite hardened bodies and composite building materials obtained in Examples 7-1 ― 7-6 and Comparative Examples 7-1 and 7-2, tests are made to measure bending strengths at dry state and wet state, compression strength, workability, nail striking property and cracking in freezing. The results are shown in Table 7. Moreover, the bending strength is measured according to a method defined in JIS A6901, and the compression strength is measured according to a method defined in JIS A5416, respectively. The bending strength at wet state is measured according to JIS A6901 after water is absorbed by the composite hardened body according to JIS A1437.

And also, the workability is judged by subjecting to a cutting work with a circular saw for woodworking. Furthermore, the nail striking property is evaluated by striking a nail of 4 mm in diameter and 50 mm in length to measure a presence or an absence of crack. Further, the cracking in freezing is measured according to JIS A1435.

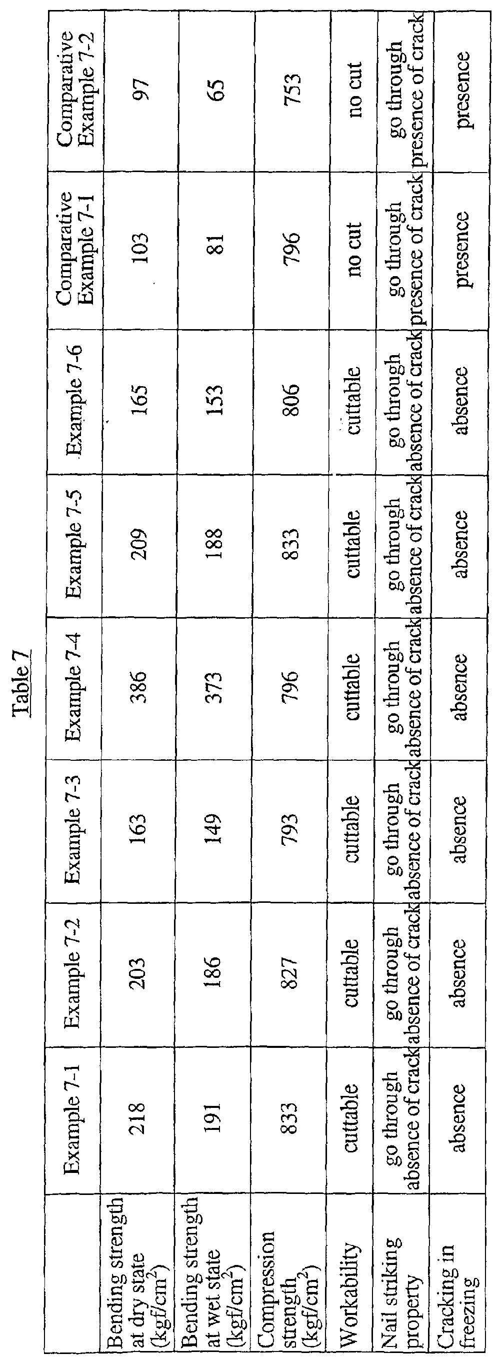

Further, an immersion test in water for 24 hours (water absorbing test) is made with respect to the composite hardened bodies obtained in Examples 7-1 ― 7-10 and Comparative Example 7-3 to measure a change in size before and after the test, a changing ratio and bending strength. The results are shown in Table 8. As seen from Table 8, the composite hardened bodies containing the water-absorption preventing agent or provided with the water-absorption preventing agent layer hardly absorb water and are less in the lowering of the bending strength and the size changing ratio.

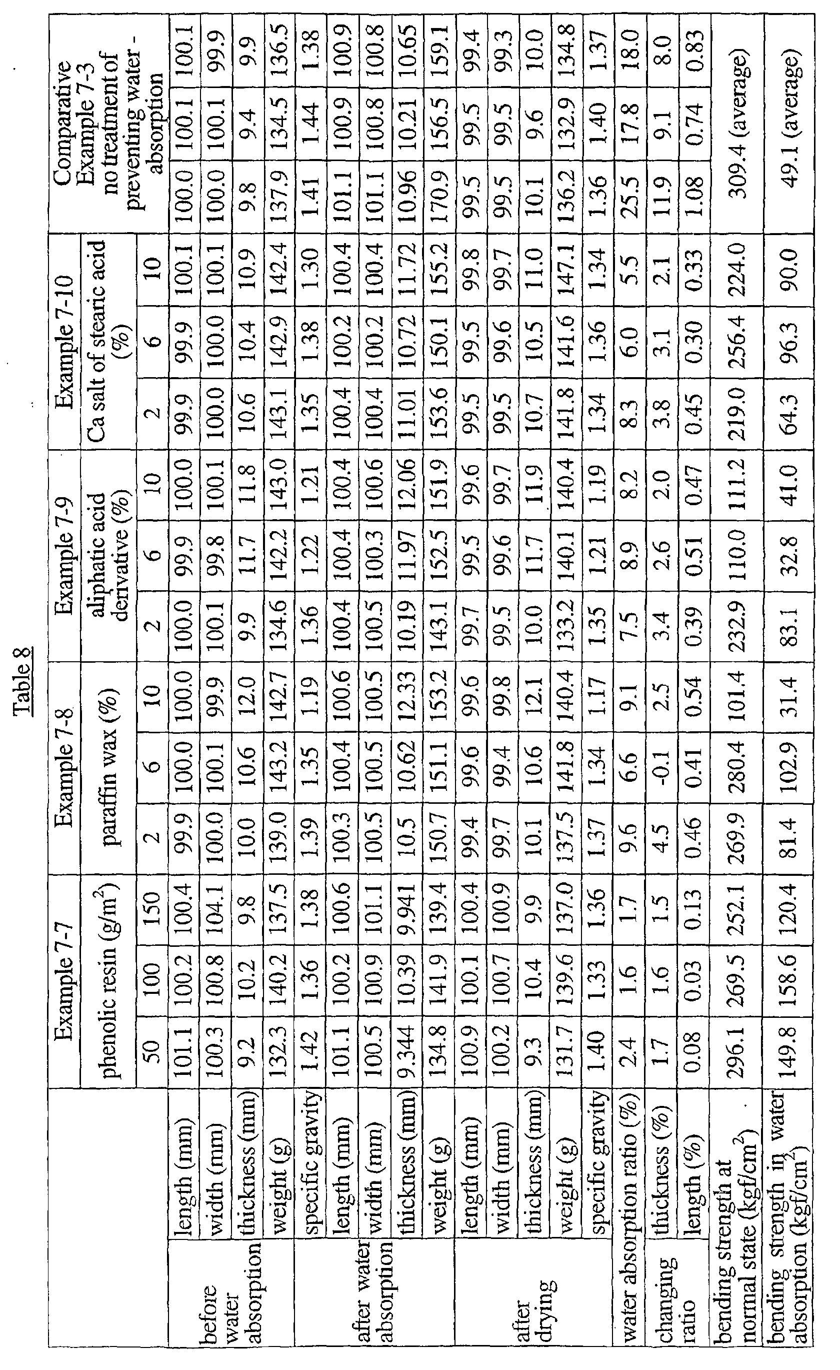

And also, the crystalline structures of the composite hardened bodies of Example 7-1 and Example 7-3 are confirmed by an X-ray diffractometry. The X-ray diffraction charts are the same as shown in Figs. 4 and 5, respectively. Moreover, the X-ray diffractometry is carried out by using MiniFlex made by Rigaku and Cu as a target. It is ascertained that the crystalline structure is included in the amorphous structure because a gentle undulation (harrow) is observed about 2θ: 22° and a peak indicating the crystalline structure is also observed. And also, crystal of calcium carbonate (calsite), kaolinite and crystal body of SiO₂ are identified from the peaks. The content of calcium carbonate is 9.8% by weight to the composite hardened body as a conversion value.

### INDUSTRIAL APPLICABILITY

As mentioned above, the composite hardened bodies according to the invention are cheap materials being excellent in the workability and productivity and having a high bending strength, so that it is possible to advantageously apply them in various fields. Especially, since the nail may be struck, the invention can provide a raw material most suitable for building materials in a low cost.

In the plate-shaped building materials and composite building materials using the composite hardened body according to the invention, building materials being excellent in the workability and productivity and having a high bending strength and capable of striking the nail can be provided cheaply.

Furthermore, the composite hardened bodies according to the invention become cheap materials being excellent in the workability and productivity and having a high bending strength at not only a dry state but also a wet state, so that they are made possible in advantageous application for various fields. Especially, since the waterproofness is excellent and the striking of the nail is possible, a raw material most suitable for an exterior member of the building material.

## Claims

1. A composite hardened body comprising an amorphous body of two or more oxides and including fibrous materials in the amorphous body.

2. A composite hardened body according to claim 1, wherein the oxide is Al₂O₃, SiO₂, CaO, Na₂O, MgO, P₂O₅, SO₃, K₂O, TiO₂, MnO, Fe₂O₃ or ZnO.

3. A composite hardened body comprising an amorphous body of Al₂O₃-SiO₂-CaO system and including fibrous materials in the amorphous body.

4. A composite hardened body comprising an amorphous body of Al₂O₃-SiO₂-CaO-oxide system and including fibrous materials in the amorphous body.

5. A composite hardened body according to claim 4, wherein the oxide is at least one selected from Na₂O, MgO, P₂O₅, SO₃, K₂O, TiO₂, MnO, Fe₂O₃ and ZnO.

6. A composite hardened body according to claim 3 or 4, wherein the amorphous body has a composition converted into each of Al₂O₃, SiO₂ and CaO that Al₂O₃: 5-51 % by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.

7. A composite hardened body according to any one of claims 1 to 6, wherein the fibrous material is an organic fibrous material consisting of a polysaccharide.

8. A composite hardened body according to any one of claims 1 to 7, which further contains a halogen.

9. A composite hardened body according to any one of claims 1 to 8, which further has a crystal body.

10. A composite hardened body formed by hardening a paper-making sludge as an industrial waste.

11. A composite hardened body comprising an amorphous body in which two or more elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis, and fibrous materials mixed in the amorphous body.

12. A composite hardened body comprising an amorphous body in which Al, Si and Ca are confirmed to be existent by a fluorescent X-ray analysis and a harrow is observed within a range of 2θ: 15°-40° by an X-ray diffraction analysis, and fibrous materials mixed in the amorphous body.

13. A composite hardened body comprising an amorphous body in which Al, Si and Ca are confirmed to be existent by a fluorescent X-ray analysis and further at least one element selected from Na, Mg, P, S, K, Ti, Mn, Fe and Zn is confirmed to be existent by the fluorescent X-ray analysis and a harrow is observed within a range of 2θ: 15°-40° by an X-ray diffraction analysis, and fibrous materials mixed in the amorphous body.

14. A composite hardened body according to any one of claims 11 to 13, wherein the fibrous material is an organic fibrous material consisting of a polysaccharide.

15. A composite hardened body according to any one of claims 11 to 14, which further contains a halogen.

16. A composite hardened body according to any one of claims 11 to 15, which further has a crystal body.

17. A composite hardened body according to any one of claims 11 to 16, wherein the amorphous body is formed by hardening a paper-making sludge as an industrial waste.

18. A composite hardened body according to any one of claims 1 to 17 which further contains inorganic powder.

19. A composite hardened body according to any one of claims 1 to 17, wherein further contains a binder.

20. A composite hardened body according to any one of claims 1 to 9 or any one of claims 11 to 17, wherein the fibrous materials are oriented.

21. A composite building material comprising a reinforcing layer formed on at least one surface of a core material, in which a composite hardened body as claimed in any one of claims 1 to 20 is applied to said core material.

22. A composite hardened body comprising an inorganic amorphous body and organic fibrous materials consisting of a polysaccharide and dispersed therein.

23. A composite hardened body according to claim 22, wherein a binder is further included in the composite hardened body.

24. A composite hardened body according to claim 22 or 23, wherein a halogen is included in the composite hardened body.

25. A composite hardened body according to any one of claims 22 to 24, wherein a crystal body is included in the composite hardened body.

26. A composite hardened body comprising inorganic powder and organic fibrous materials consisting of a polysaccharide.

27. A composite hardened body comprising inorganic powder, organic fibrous materials consisting of a polysaccharide and a binder.

28. A composite hardened body according to claim 23 or 27, wherein the binder is a thermosetting resin or an inorganic binding agent.

29. A composite hardened body according to claim 26 or 27 or claim 28 dependent upon claim 27, wherein the inorganic powder is powder of an inorganic industrial waste.

30. A composite hardened body according to claim 29, wherein the inorganic industrial waste is at least one selected from the group consisting of a hardened body of an inorganic mass included in a paper-making sludge, fired powder of a paper-making sludge, polished scrap of glass and pulverized scrap of silica sand.

31. A composite hardened body according to any one of claims 22 to 30, wherein the organic fibrous material is a pulp or a pulp dreg.

32. A plate-shaped building material obtained by shaping a material including a composite hardened body as claimed in any one of claims 22 to 31 into a plate.

33. A composite building material comprising a reinforcing layer formed on at least one surface of a core material, in which the core material consists of a material including a composite hardened body as claimed in any one of claims 22 to 31.

34. A plate-shaped building material comprising inorganic powder of an industrial waste and organic fibrous materials.

35. A plate-shaped building material according to claim 34, which further contains a binder.

36. A plate-shaped building material according to claim 35, wherein the binder is a thermosetting resin or an inorganic binding agent.

37. A plate-shaped building material according to claim 34, wherein the organic fibrous material is an industrial waste.

38. A plate-shaped building material according to claim 37, wherein the industrial waste is an unfired mass of paper-making sludge.

39. A plate-shaped building material according to claim 34, wherein the organic fibrous material is a pulp or a pulp dreg.

40. A plate-shaped building material according to claim 34 or 35, wherein the powder of the inorganic industrial waste is at least one powder selected from the group consisting of a hardened body of an inorganic mass included in a paper-making sludge, fired powder of a paper-making sludge, polished scrap of glass and pulverized scrap of silica sand.

41. A composite building material comprising a reinforcing layer consisting of a resin and a fibrous substrate and formed on at least one surface of a plate-shaped building material as claimed in any one of claims 34 to 40.

42. A composite hardened body comprising an inorganic crystal in an inorganic amorphous body and including fibrous materials therein.

43. A composite hardened body comprising CaCO₃ in an inorganic amorphous body and including fibrous materials therein.

44. A composite hardened body according to claim 42 or 43, wherein the inorganic amorphous body includes at least two elements selected from Al, Si, Ca, Na, Mg, P, S, K, Ti, Mn, Fe and Zn.

45. A composite hardened body according to claim 42 or 43, wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.

46. A composite hardened body according to claim 42 or 43, wherein the inorganic amorphous body is an inorganic amorphous body of Al₂O₃-SiO₂-CaO system.

47. A composite hardened body according to claim 42 or 43, wherein the inorganic amolphous body is an inorganic amorphous body of Al₂O₃-SiO₂-CaO-oxide system.

48. A composite hardened body according to claim 47, wherein the oxide is at least one selected from Na₂O, MgO, P₂O₅, SO₃, K₂O, TiO₂, MnO, Fe₂O₃ and ZnO.

49. A composite hardened body according to claim 45, 46 or 47, wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.

50. A composite hardened body according to claim 42 or 43, wherein the inorganic amorphous body contains two or more elements selected from Al, Si, Ca, Na, Mg, P, S, K, Ti, Mn, Fe and Zn confirmed by a fluorescent X-ray analysis and has a harrow observed within a range of 2θ: 15°-40° by an X-ray diffraction analysis.

51. A composite hardened body according to claim 42 or 43, wherein the inorganic amorphous body contains Al, Si and Ca confirmed by a fluorescent X-ray analysis and has a harrow observed within a range of 2θ: 15°-40° in a chart by an X-ray diffraction analysis.

52. A composite hardened body according to claim 42 or 43, wherein the inorganic amorphous body contains Al, Si and Ca confirmed by a fluorescent X-ray analysis and further includes at least one element selected from Na, Mg, P, S, K, Ti, Mn, Fe and Zn confirmed by the fluorescent X-ray analysis and has a harrow observed within a range of 2θ: 15°-40° in a chart by an X-ray diffraction analysis.

53. A composite hardened body according to any one of claims 42 to 51, wherein the fibrous material is an organic fibrous material consisting of a polysaccharide.

54. A composite hardened body according to any one of claims 42 to 52, which further contains a halogen.

55. A composite hardened body according to any one of claims 42 to 54, wherein the fibrous materials are oriented.

56. A composite hardened body formed by hardening a paper-making sludge as an industrial waste and containing an inorganic crystal.

57. A composite hardened body formed by hardening a paper-making sludge as an industrial waste and containing CaCO₃.

58. A composite hardened body according to any one of claims 42 to 57, which further contains inorganic powder.

59. A composite hardened body according to any one of claims 42 to 58, which further contains a binder.

60. A composite building material comprising a reinforcing layer formed on at least one surface of a core material, in which a composite hardened body as claimed in any one of claims 42 to 59 is applied to said core material.

61. A composite building material comprising a decorative layer formed on at least one surface of a core material, in which a composite hardened body as claimed in any one of claims 42 to 59 is applied to said core material.

62. A composite building material comprising an electromagnetic wave shielding layer formed on at least one surface of a core material, in which a composite hardened body as claimed in any one of claims 42 to 59 is applied to said core material.

63. A composite building material comprising a waterproof paper adhered onto at least one surface of a core material, in which a composite hardened body as claimed in any one of claims 42 to 59 is applied to said core material.

64. A composite hardened body comprising fibrous material included in an inorganic amorphous body, and having a specific gravity of 0.2-2.2.

65. A composite hardened body according to claim 64, wherein at least two elements selected from Al, Si, Ca, Na, Mg, P, S, K, Ti, Mn, Fe and Zn are included in the inorganic amorphous body.

66. A composite hardened body according to claim 64, wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.

67. A composite hardened body comprising fibrous materials included in an inorganic amorphous body of Al₂O₃-SiO₂-CaO system, and having a specific gravity of 0.2-2.2.

68. A composite hardened body comprising fibrous materials included in an inorganic amorphous body of Al₂O₃-SiO₂-CaO-oxide system, and having a specific gravity of 0.2-2.2.

69. A composite hardened body according to claim 68, wherein the oxide is at least one selected from Na₂O, MgO, P₂O₅, SO₃, K₂O, TiO₂, MnO, Fe₂O₃ and ZnO.

70. A composite hardened body according to claim 67 or 68, wherein the amorphous body has a composition converted into each of Al₂O₃, SiO₂ and CaO that Al₂O₃: 5-51 % by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.

71. A composite hardened body according to any one of claims 64 to 70, wherein the fibrous material is an organic fibrous material consisting of a polysaccharide.

72. A composite hardened body according to any one of claims 64 to 71, which further contains a halogen.

73. A composite hardened body according to any one of claims 64 to 72, which further has a crystal body.

74. A composite hardened body formed by hardening a paper-making sludge as an industrial waste, and having a specific gravity of 0.2-2.2.

75. A composite hardened body, **characterized in that** fibrous material are included in an inorganic amorphous body in which at least two elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis, and a specific gravity is 0.2-2.2.

76. A composite hardened body, **characterized in that** fibrous material are included in an inorganic amorphous body in which Al, Si and Ca are confirmed to be existent by a fluorescent X-ray analysis and a harrow is observed within a range of 2θ: 15°-40° by an X-ray diffraction analysis, and a specific gravity is 0.2-2.2.

77. A composite hardened body, **characterized in that** fibrous material are included in an inorganic amorphous body in which Al, Si and Ca are confirmed to be existent by a fluorescent X-ray analysis and further at least one element selected from Na, Mg, P, S, K, Ti, Mn, Fe and Zn are confirmed to be existent by the fluorescent X-ray analysis and a harrow is observed within a range of 2θ: 15°-40° by an X-ray diffraction analysis, and a specific gravity is 0.2-2.2.

78. A composite hardened body according to any one of claims 75 to 77, wherein the fibrous material is an organic fibrous material consisting of a polysaccharide.

79. A composite hardened body according to any one of claims 75 to 77, which further contains a halogen.

80. A composite hardened body according to any one of claims 75 to 77, which further has a crystal body.

81. A composite hardened body according to any one of claims 75 to 77, wherein the composite hardened body is formed by hardening a paper-making sludge as an industrial waste.

82. A composite hardened body according to any one of claims 64 to 81, which further contains inorganic powder.

83. A composite hardened body according to any one of claims 64 to 82, which further contains a binder.

84. A composite building material comprising a reinforcing layer formed on at least one surface of a core material, in which a composite hardened body as claimed in any one of claims 64 to 83 is applied to said core material.

85. A composite building material comprising a decorative layer formed on at least one surface of a core material, in which a composite hardened body as claimed in any one of claims 64 to 83 is applied to said core material.

86. A composite building material comprising an electromagnetic wave shielding layer formed on at least one surface of a core material, in which a composite hardened body as claimed in any one of claims 64 to 83 is applied to said core material.

87. A composite building material comprising a waterproof paper adhered onto at least one surface of a core material, in which a composite hardened body as claimed in any one of claims 64 to 83 is applied to said core material.

88. A composite hardened body comprising fibrous materials included in an inorganic amorphous body, and having a porosity of 5-60%.

89. A composite hardened body according to claim 88, wherein at least two elements selected from Al, Si, Ca, Na, Mg, P, S, K, Ti, Mn, Fe and Zn are included in the inorganic amorphous body.

90. A composite hardened body according to claim 88, wherein the inorganic amorphous body consists of two or more oxides, and the oxide is selected from Al₂O₃, SiO₂, CaO, Na₂O, MgO, P₂O₅, SO₃, K₂O, TiO₂, MnO, Fe₂O₃ and ZnO.

91. A composite hardened body comprising fibrous materials included in an inorganic amorphous body of Al₂O₃-SiO₂-CaO system, and having a porosity of 5-60%.

92. A composite hardened body comprising fibrous materials included in an inorganic amorphous body of Al₂O₃-SiO₂-CaO-oxide system, and having a porosity of 5-60%.

93. A composite hardened body according to claim 92, wherein the oxide is at least one selected from Na₂O, MgO, P₂O₅, SO₃, K₂O, TiO₂, MnO, Fe₂O₃ and ZnO.

94. A composite hardened body according to claim 91 or 92, wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.

95. A composite hardened body according to any one of claims 88 to 94, wherein the fibrous material is an organic fibrous material consisting of a polysaccharide.

96. A composite hardened body according to any one of claims 88 to 95, wherein the fibrous materials are oriented into a particular direction.

97. A composite hardened body according to any one of claims 88 to 96, which further contains a halogen.

98. A composite hardened body according to any one of claims 88 to 97, which further has a crystal body.

99. A composite hardened body according to any one of claims 88 to 98, wherein the composite hardened body is formed by hardening a paper-making sludge as an industrial waste.

100. A composite hardened body formed by hardening a paper-making sludge as an industrial waste, and having a porosity of 5-60%.

101. A composite hardened body, **characterized in that** fibrous materials are included in an inorganic amorphous body in which at least two elements selected from Al, Si, Ca, Na, Mg, P, S, K, Ti, Mn, Fe and Zn are confirmed to be existent by a fluorescent X-ray analysis and a harrow is observed within a range of 2θ: 15°-40° by an X-ray diffraction analysis, and a porosity is 5-60%.

102. A composite hardened body, **characterized in that** fibrous material are included in an inorganic amorphous body in which Al, Si and Ca are confirmed to be existent by a fluorescent X-ray analysis and a harrow is observed within a range of 2θ: 15°-40° in a chart by an X-ray diffraction analysis, and a porosity is 5-60%.

103. A composite hardened body, **characterized in that** fibrous material are included in an inorganic amorphous body in which Al, Si and Ca are confirmed to be existent by a fluorescent X-ray analysis and further at least one element selected from Na, Mg, P, S, K, Ti, Mn, Fe and Zn are confirmed to be existent by the fluorescent X-ray analysis and a harrow is observed within a range of 2θ: 15°-40° in a chart by an X-ray diffraction analysis, and a porosity is 5-60%.

104. A composite hardened body according to any one of claims 101 to 103, wherein the fibrous material is an organic fibrous material consisting of a polysaccharide.

105. A composite hardened body according to any one of claims 101 to 104, wherein the fibrous materials are oriented into a particular direction.

106. A composite hardened body according to any one of claims 101 to 103, which further contains a halogen.

107. A composite hardened body according to any one of claims 101 to 103, which further has a crystal body.

108. A composite hardened body according to any one of claims 101 to 103, wherein the composite hardened body is formed by hardening a paper-making sludge as an industrial waste.

109. A composite hardened body according to any one of claims 88 to 108, which further contains inorganic powder.

110. A composite hardened body according to any one of claims 88 to 108, which further contains a binder.

111. A composite building material comprising a reinforcing layer formed on at least one surface of a core material, in which a composite hardened body as claimed in any one of claims 88 to 110 is applied to said core material.

112. A composite building material comprising a reinforcing layer formed on at least one surface of a core material, in which a composite hardened body as claimed in any one of claims 88 to 110 is applied to said core material.

113. A composite building material comprising a decorative layer formed on at least one surface of a core material, in which a composite hardened body as claimed in any one of claims 88 to 110 is applied to said core material.

114. A composite building material comprising an electromagnetic wave shielding layer formed on at least one surface of a core material, in which a composite hardened body as claimed in any one of claims 88 to 110 is applied to said core material.

115. A composite building material comprising a waterproof paper adhered onto at least one surface of a core material, in which a composite hardened body as claimed in any one of claims 88 to 110 is applied to said core material.

116. A composite hardened body comprising fibrous materials included in an inorganic amorphous body containing at least two elements selected from Al, Si, Ca, Na, Mg, P, S, K, Ti, Mn, Fe and Zn.

117. A composite hardened body comprising fibrous materials included in an inorganic amorphous body containing at least Al, Si and Ca.

118. A composite hardened body comprising fibrous materials included in an inorganic amorphous body containing Al, Si and Ca and further at least one element selected from Na, Mg, P, S, K, Ti, Mn, Fe and Zn.

119. A composite hardened body according to any one of claims 116 to 118, wherein the amorphous body has a composition converted into each of Al₂O₃, SiO₂ and CaO that Al₂O₃: 5-51% by weight per total weight of the composite hardened body, SiO₂: 8-53% by weight per total weight of the composite hardened body and CaO: 10-63% by weight per total weight of the composite hardened body, and a sum of three oxides does not exceeds 100% by weight.

120. A composite hardened body according to any one of claims 116 to 118, wherein the fibrous material is an organic fibrous material consisting of a polysaccharide.

121. A composite hardened body according to any one of claims 116 to 120, which further contains a halogen.

122. A composite hardened body according to any one of claims 116 to 121, which further has a crystal body.

123. A composite hardened body according to any one of claims 116 to 122, wherein the fibrous materials are oriented.

124. A composite hardened body formed by hardening a paper-making sludge as an industrial waste.

125. A composite building material comprising a reinforcing layer formed on at least one surface of a core material, in which a composite hardened body as claimed in any one of claims 115 to 124 is applied to said core material.

126. A composite building material comprising a decorative layer formed on at least one surface of a core material, in which a composite hardened body as claimed in any one of claims 116 to 125 is applied to said core material.

127. A composite building material comprising an electromagnetic wave shielding layer formed on at least one surface of a core material, in which a composite hardened body as claimed in any one of claims 116 to 126 is applied to said core material.

128. A composite building material comprising a waterproof paper adhered onto at least one surface of a core material, in which a composite hardened body as claimed in any one of claims 116 to 127 is applied to said core material.

129. A method of producing as composite hardened body consisting of an inorganic amorphous body and organic fibrous materials, which comprises drying and hardening a paper-making sludge.

130. A method of producing a composite hardened body according to claim 129, wherein the paper-making sludge is dried and hardened while applying a pressure.

131. A method of producing a composite hardened body according to claim 129 or 130, wherein the paper-making sludge is dried and hardened while applying a pressure of 10-300 kg/cm².

132. A method of producing a composite hardened body according to claim 129, wherein the paper-making sludge is dehydrated while applying a pressure and then dried and hardened.

133. A method of producing a composite hardened body according to claim 132, wherein the paper-making sludge is applied with a pressure of 10-100 kg/cm² and then dried and hardened.

134. A method of producing a composite hardened body according to any one of claims 129 to 133, wherein inorganic particles are included in the paper-making sludge.

135. A method of producing a composite hardened body according to any one of claims 129 to 133, wherein the pressure is applied while dehydrating.

136. A method of producing a composite hardened body consisting of an inorganic amorphous body and organic fibrous materials, which comprises dehydrating a paper-making sludge by suction and then drying and hardening it.

137. A method of producing a composite hardened body consisting of an inorganic amorphous body and organic fibrous materials, which comprises dehydrating a paper-making sludge by suction and an application of a pressure and then drying and hardening it.

138. A composite hardened body comprising an inorganic hardened body and a water absorption preventing agent, in which fibrous materials are included in the inorganic amorphous body.

139. A composite hardened body comprising an inorganic hardened body consisting of two or more oxides and a water absorption preventing agent, in which fibrous materials are included in the inorganic amorphous body.

140. A composite hardened body according to claim 138 or 139, wherein the water absorption preventing agent is included within a range of 0.1-3.0 wt%.

141. A composite hardened body according to claim 138 or 139, wherein the water absorption preventing agent is calcium stearate, an aliphatic acid derivative or a paraffin wax.

142. A composite hardened body comprising fibrous materials included in an inorganic amorphous body, in which a water absorption preventing agent layer is formed on a surface thereof.

143. A composite hardened body according to claim 142, wherein the water absorption preventing agent layer is a thermosetting resin layer.

144. A composite hardened body according to any one of claims 138 to 143, wherein the fibrous materials are oriented.

145. A composite building material comprising a reinforcing layer formed on at least one surface of a core material, in which a composite hardened body as claimed in any one of claims 138 to 144 is applied to said core material.
